# EUROPEAN PATENT APPLICATION

(11) **EP 4 618 588 A1**
(43) Date of publication of application: **17.09.2025**
(21) Application number: 23947337.4
(22) Date of filing: 10.11.2023
(51) Int. Cl.: H04R 1/10

(54) **EARPHONE**

(30) Priority: 28.07.2023 CN 202310956970
(71) Applicant: Shenzhen Shokz Co., Ltd., Shenzhen, Guangdong 518108 (CN)
(72) Inventor: YAN, Zeteng, Shenzhen, Guangdong 518108 (CN); ZHENG, Zeying, Shenzhen, Guangdong 518108 (CN); ZHANG, Haofeng, Shenzhen, Guangdong 518108 (CN); LI, Yongjian, Shenzhen, Guangdong 518108 (CN); XU, Jiang, Shenzhen, Guangdong 518108 (CN); XIE, Shuailin, Shenzhen, Guangdong 518108 (CN); ZHU, Guangyuan, Shenzhen, Guangdong 518108 (CN); ZHANG, Lei, Shenzhen, Guangdong 518108 (CN); XIE, Guolin, Shenzhen, Guangdong 518108 (CN); ZHONG, Lei, Shenzhen, Guangdong 518108 (CN); TONG, Peigeng, Shenzhen, Guangdong 518108 (CN); MA, Xiaoyu, Shenzhen, Guangdong 518108 (CN)
(74) Representative: Wang, Bo
(86) International application number: PCT/CN2023/131102
(87) International publication number: WO 2025/025399

(57) **Abstract**

The present disclosure discloses an earphone including a housing assembly and an ear hook. The housing assembly is configured to form an accommodation space and has a first direction and a second direction disposed orthogonally to the first direction. The housing assembly further includes a first end and a second end disposed opposite to each other along the first direction. The ear hook is connected to the housing assembly. In a wearing state, at least a portion of the ear hook is located at a rear side of an ear portion of a user, the housing assembly is stacked on a front side of the ear portion of the user along the second direction, and at least a portion of the first end of the housing assembly extends into a concha cavity of the ear portion of the user. The first direction has a positive direction pointing from the second end to the first end. An outer wall surface of a side of the housing assembly facing away from the ear portion of the user includes a first arc-shaped transition region. On a reference plane defined by the first direction and the second direction, a curvature radius of the first arc-shaped transition region gradually decreases along the positive direction of the first direction and gradually approaches the ear portion of the user, so as to form a first portion of the first end.

## Description

### TECHNICAL FIELD

The present disclosure relates to the field of electronic devices, and in particular, to earphones.

### BACKGROUND

With the increasing proliferation of electronic devices, the electronic devices have become indispensable social and entertainment tools in people's daily lives, and people's requirements for the electronic devices are also increasing. The electronic devices (e.g., earphones, smart glasses) have also been widely used in people's daily life, which can be used in conjunction with terminal devices (e.g., mobile phones, computers, etc.) to provide users with an auditory feast.

However, some existing earphones fail to fit the shape of the user's ear when the user wears the earphones, leading to issues such as ear pressure, wearing discomfort, etc.

### SUMMARY

The present disclosure provides an earphone. The earphone includes a housing assembly and an ear hook. The housing assembly is configured to form an accommodation space and has a first direction and a second direction disposed orthogonally to the first direction. The housing assembly further includes a first end and a second end disposed opposite to each other along the first direction. The ear hook is connected to the housing assembly. In a wearing state, at least a portion of the ear hook is located at a rear side of an ear portion of a user, the housing assembly is stacked on a front side of the ear portion of the user along the second direction, and at least a portion of the first end of the housing assembly extends into a concha cavity of the ear portion of the user. The first direction has a positive direction pointing from the second end to the first end. An outer wall surface of a side of the housing assembly facing away from the ear portion of the user includes a first arc-shaped transition region. On a reference plane defined by the first direction and the second direction, a curvature radius of the first arc-shaped transition region gradually decreases along the positive direction of the first direction and gradually approaches the ear portion of the user, so as to form a first portion of the first end.

Through the above configuration, the outer wall surface of the housing assembly can gradually bend toward the side where the ear of the user is located, thereby better conforming to a shape of the concha cavity and reducing a foreign body sensation when the user wears the earphone.

In some embodiments, an extension length of the first arc-shaped transition region along the first direction is not less than 16 millimeters.

In some embodiments, the first end has a first reference point farthest from the second end along the first direction, and an angle between a tangent line of the first arc-shaped transition region at the first reference point and the second direction is within a range from 5 degrees to 8 degrees.

In some embodiments, the first arc-shaped transition region has a first intermediate reference point, a distance between the first intermediate reference point and the first reference point along the first direction is within a range from 1.8 millimeters to 3 millimeters, and an angle between a tangent line of the first arc-shaped transition region at the first intermediate reference point and the second direction is within a range from 35 degrees and 53 degrees.

In some embodiments, the first arc-shaped transition region has a second intermediate reference point, a distance between the second intermediate reference point and the first reference point along the first direction is within a range from 6 millimeters to 9 millimeters, and an angle between a tangent line of the first arc-shaped transition region at the second intermediate reference point and the second direction is within a range from 60 degrees to 80 degrees.

In some embodiments, a side of the housing assembly facing the ear portion of the user has a third reference point adjacent to the first end and closest to the ear portion of the user along the second direction. An outer wall surface of the side of the housing assembly facing the ear portion of the user includes a second arc-shaped transition region located between the first reference point and the third reference point. The first direction has a negative direction pointing from the first end to the second end. A curvature radius of the second arc-shaped transition region gradually increases along the negative direction of the first direction and gradually approaches the ear portion of the user, so as to form a second portion of the first end.

In some embodiments, a distance from the third reference point to the first reference point along the first direction is within a range from 3 millimeters to 6 millimeters.

In some embodiments, an angle between a tangent line of the second arc-shaped transition region at the third reference point and the second direction is within a range from 75 degrees to 95 degrees.

In some embodiments, the outer wall surface of the side of the housing assembly facing the ear portion of the user further includes a third arc-shaped transition region located on a side of the third reference point facing away from the first reference point, and the third arc-shaped transition region is disposed in an arch shape away from the ear portion of the user.

In some embodiments, a distance from an apex of the third arc-shaped transition region to the first reference point along the first direction is within a range from 15 millimeters to 18 millimeters, and a distance from the apex of the third arc-shaped transition region to the first reference point along the second direction is within a range from 1 millimeter to 3 millimeters.

### BRIEF DESCRIPTION OF THE DRAWINGS

In order to more clearly illustrate the technical solutions in the embodiments of the present disclosure or the prior art, the following will briefly introduce the drawings that need to be used in the description of the embodiments or the prior art. Obviously, the accompanying drawings in the following description are merely some embodiments of the present disclosure. For those of ordinary skill in the art, other drawings may also be obtained according to these drawings without creative work.
FIG. 1 is a schematic diagram illustrating an exemplary anterior side profile of an ear portion of a user according to some embodiments of the present disclosure;
FIG. 2 is a schematic diagram illustrating an exemplary overall structure of an earphone according to some embodiments of the present disclosure;
FIG. 3 is a schematic diagram illustrating an exemplary internal structure of an earphone according to some embodiments of the present disclosure;
FIG. 4 is a schematic diagram illustrating an exemplary structure of a first housing of an earphone according to some embodiments of the present disclosure;
FIG. 5 is a schematic diagram illustrating an exemplary sectional structure of the earphone shown in FIG. 2 along a direction of A-A;
FIG. 6 is a schematic diagram illustrating exemplary positions of reference points on an upper portion of a first housing and a second housing in FIG. 5;
FIG. 7 is a schematic diagram illustrating exemplary positions of other reference points on an upper portion of the first housing and the second housing in FIG. 5;
FIG. 8 is a schematic diagram illustrating an exemplary structure of an earphone from a perspective according to some embodiments of the present disclosure;
FIG. 9 is a schematic structural diagram illustrating an exemplary structure of a charging case for use in conjunction with an earphone according to some embodiments of the present disclosure;
FIG. 10 is a schematic diagram illustrating an exemplary structure of an earphone from another perspective according to some embodiments of the present disclosure;
FIG. 11 is a schematic diagram illustrating an exemplary structure of an earphone according to some embodiments of the present disclosure;
FIG. 12 is a schematic diagram illustrating another exemplary structure of an earphone according to some embodiments of the present disclosure;
FIG. 13 is a schematic diagram illustrating yet another exemplary structure of an earphone according to some embodiments of the present disclosure;
FIG. 14 is a schematic diagram illustrating still another exemplary structure of an earphone according to some embodiments of the present disclosure;
FIG. 15 is a schematic diagram illustrating an exemplary structure of components of an earphone according to some embodiments of the present disclosure;
FIG. 16 is a schematic diagram illustrating an exemplary structure of other components of an earphone according to some embodiments of the present disclosure;
FIG. 17 is a schematic diagram illustrating a front view of the earphone shown in FIG. 2;
FIG. 18 is a schematic diagram illustrating an exemplary sectional structure of the earphone along a section line M-M shown in FIG. 17;
FIG. 19 is a schematic diagram illustrating an enlarged structure of a region C in the earphone shown in FIG. 17;
FIG. 20 is a schematic diagram illustrating an enlarged structure of a region B in the earphone shown in FIG. 17;
FIG. 21 is a schematic diagram illustrating an exemplary three-dimensional structure of an earphone according to some embodiments of the present disclosure;
FIG. 22 is a schematic diagram illustrating an exemplary sectional structure of the earphone shown in FIG. 21;
FIG. 23 is a schematic diagram illustrating an exemplary exploded structure of a host module of the earphone shown in FIG. 21;
FIG. 24 is a schematic diagram illustrating an exemplary structure of a basin stand assembled in a first accommodation cavity shown in FIG. 23;
FIG. 25 is a schematic diagram illustrating an enlarged structure of a region A in the earphone shown in FIG. 24;
FIG. 26 is a schematic diagram illustrating another enlarged structure of a region A in the earphone shown in FIG. 24;
FIG. 27 is a schematic diagram illustrating an exemplary three-dimensional structure of a speaker shown in FIG. 23;
FIG. 28 is a schematic diagram illustrating an exemplary assembled structure of a speaker and a bracket shown in FIG. 23; and
FIG. 29 is a schematic diagram illustrating an exemplary three-dimensional structure of a bracket shown in FIG. 23.

### DETAILED DESCRIPTION

The following will clearly and completely describe the technical solutions in the embodiments of the present disclosure with reference to the accompanying drawings in the embodiments of the present disclosure. Obviously, the described embodiments are only a part of the embodiments of the present disclosure, and not all of them. Based on the embodiments of the present disclosure, all other embodiments obtained by persons of ordinary skill in the art without making creative efforts belong to the scope of protection of the present disclosure.

Reference herein to the term "embodiment" means that a particular feature, structure, or characteristic described in connection with the embodiment can be included in at least one embodiment of the present disclosure. The occurrences of the term in various places in the present disclosure are not necessarily all referring to the same embodiment, nor are separate or alternative embodiments mutually exclusive of other embodiments. It is understood explicitly and implicitly by those skilled in the art that the embodiments described herein can be combined with other embodiments.

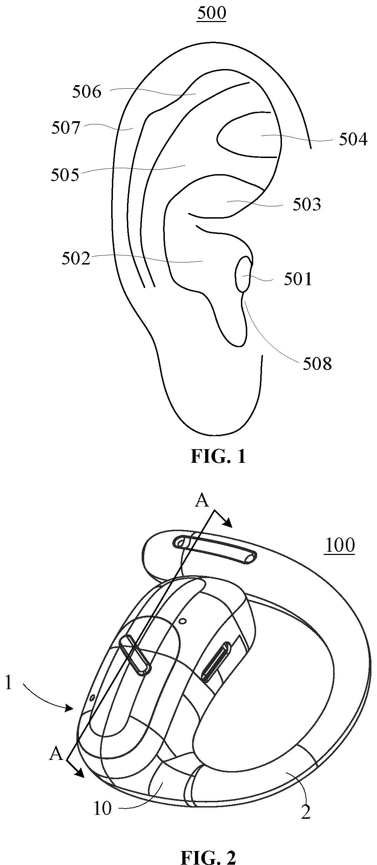

Referring to FIG. 1, an ear portion 500 of a user may include physiological parts, such as an external ear canal 501, a concha cavity 502, a cymba conchae 503, a triangular fossa 504, an antihelix 505, a scaphoid fossa 506, a helix 507, an antitragus 508, etc. Although the external ear canal 501 has a certain depth and extends to an eardrum of the ear portion, for the convenience of description and in combination with FIG. 1, unless otherwise specified, the external ear canal 501 refers to an entrance (i.e., an ear hole) of the external ear canal 501 that is away from the tympanic membrane in the present disclosure. Further, the physiological parts (e.g., the concha cavity 502, the cymba conchae 503, the triangular fossa 504, etc.) have a certain volume and depth, and the concha cavity 502 is directly connected to the external ear canal 501, which can be simply regarded as that the aperture is located at a bottom of the concha cavity 502.

Furthermore, different users may have individual differences, resulting in different dimensional differences (e.g., different shapes, sizes, etc.) of ear portions. For the convenience of description and to reduce (or even eliminate) the individual differences between the users, a simulator (e.g., GRAS 45BC KEMAR) including a head and (left and right) ear portions of the head may be produced based on the ANSI: S3.36, S3.25 and IEC: 60318-7 standards. Therefore, in the present disclosure, descriptions such as "the user wears an earphone 100," "the earphone 100 is in a wearing state," "in the wearing state," etc., may refer to that the earphone 100 described in the present disclosure is worn on the ear portion of the simulator. Of course, due to the individual differences between different users, there may be certain differences when the earphone 100 is worn by different users and when the earphone 100 is worn on the ear portion of the simulator, but the differences should be tolerated.

Referring to FIGs. 2 to 5, the earphone 100 may include a host module 1 and an ear hook 2. The host module 1 may include a housing assembly 10 and a speaker 13. The ear hook 2 may be in a hooked shape, and the earphone 100 may be worn near the external ear canal of the user without obstructing the external ear canal. The ear hook 2 may be connected to the housing assembly 10. In a wearing state, the housing assembly 10 is located on a front side of the ear portion, and at least a portion of the ear hook 2 is located on a rear side of the ear portion of the user, so as to allow the earphone 100 to be hooked on the ear portion. Furthermore, the housing assembly 10 may be used to form an accommodation space 101. The speaker 13 may be disposed within the accommodation space 101. The housing assembly 10 is provided with a sound outlet hole for transmitting an air conduction sound provided from the speaker 13 to the external ear canal of the user.

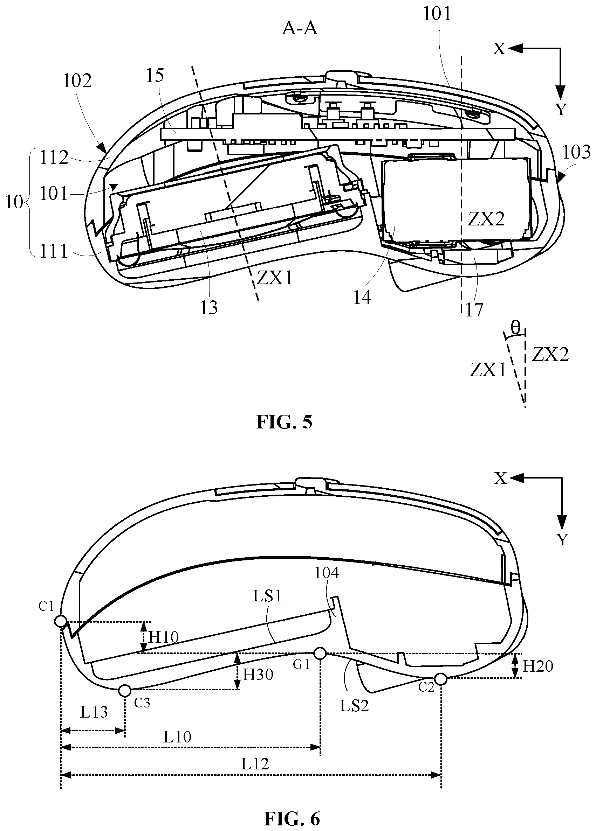

For the convenience of describing a shape of the housing assembly 10, the present disclosure defines that the housing assembly 10 has a first direction X and a second direction Y. The first direction X may be orthogonal to the second direction Y (referring to FIG. 5). The first direction X may be a length direction of the housing assembly 10, and the second direction Y may be a thickness direction of the housing assembly 10.

In the wearing state, the housing assembly 10 is stacked on the front side of the ear portion of the user along the second direction Y. The housing assembly 10 further includes a first end 102 and a second end 103 disposed opposite to each other along the first direction X. In some embodiments, the first end 102 refers to a portion of the housing assembly 10 facing the concha cavity 502 of the user during the wearing, and the second end 103 refers to a portion of the housing assembly 10 farther away from the concha cavity 502 of the user relative to the first end 102. In some embodiments, the first end 102 refers to a portion closer to the rear side of the ear portion of the user during the wearing, and the second end 103 refers to a portion farther away from the rear side of the ear portion of the user relative to the first end 102. A portion of the second end 103 may be connected to the ear hook 2 and may hereinafter be referred to as a connection end 103, and the first end 102 may hereinafter also be referred to as a free end 102.

In some embodiments, at least a portion of the first end 102 of the housing assembly 10 extends into the concha cavity 502 of the user, and leaves the external ear canal of the user in an open state. The external ear canal being in the open state refers to that the housing assembly 10 does not completely seal or block the external ear canal, allowing the external ear canal to communicate with an external environment. In addition, due to the individual differences between different users, when the earphone 100 is worn by different users, the housing assembly 10 may partially obstruct the external ear canal, but the external ear canal is still not completely blocked and communicates with the external environment.

In some embodiments, referring to FIGs. 5-7, in the second direction Y, an outer wall surface LS2 of the housing assembly 10 of the host module 1 facing a side the ear portion of the user in the wearing state is disposed in an arch shape facing away from the ear portion of the user. In this way, the configuration of the housing assembly 10 can be better fitted with the shape of the ear portion of the user, reducing pressure of the housing assembly 10 on the ear portion (especially the antitragus 508). Moreover, it eliminates the constraints imposed by a planar extension direction of the housing assembly 10, which facilitates the first end 102 of the housing assembly 10 to extend more smoothly into the concha cavity 502 of the user, thereby improving the wearing comfort and stability.

The configuration of the structure of the outer wall surface LS2 of a side of the housing assembly 10 facing the ear portion of the user in the wearing state may affect an overall structure of the housing assembly 10, thereby affecting the wearing comfort of the user. For example, the structure of the outer wall surface LS2 may affect a position of the first end 102 of the housing assembly 10. If the configuration of the outer wall surface LS2 causes the housing assembly 10 to extend too short, the first end 102 may not easily extend into the concha cavity 502 of the user. Alternatively, when the first end 102 of the housing assembly 10 extends into the concha cavity 502 of the user, the outer wall surface LS2 may fail to adequately avoid the antitragus 508 of the user, resulting in excessive pressure on the antitragus 508. Similarly, if the configuration of the outer wall surface LS2 causes the housing assembly 10 to extend too long, pressure of the first end 102 on the antihelix 505 and the concha cavity 502 may be increased. Alternatively, the outer wall surface LS2 may fail to adequately avoid the antitragus 508 of the user, resulting in excessive pressure on the antitragus 508.

Referring to FIG. 6, optionally, the first end 102 has a first reference point C1 farthest from the second end 103 along the first direction X. In some embodiments, the first reference point C1 may be a point on the first end 102 that is farthest from the second end 103 along the first direction X. In some embodiments, the first reference point C1 may be a point on the first end 102 farthest from the second end 103 along a tangent direction of an apex of the outer wall surface LS2. To prevent the arch shape of the outer wall surface LS2 from causing a portion of the housing assembly 10 closer to the first end 102 to be too short or too long, which hinders the first end 102 from properly fitting into the concha cavity 502 and reduces the wearing comfort of the user, a distance L10 between an apex G1 of the outer wall surface LS2 and the first reference point C1 in the first direction X is set within a range from 14 millimeters to 20 millimeters. The apex G1 of the outer wall surface LS2 refers to a point with a deepest concave depth in the arch shape or a point farthest from the ear portion of the user in the arch shape. The distance between the apex G1 and the first reference point C1 in the first direction X refers to a projected length of a line connecting the apex G1 and the first reference point C1 along the first direction X.

Furthermore, in order to adapt the earphone 100 to ear shapes of users, the distance L10 between the apex G1 of the outer wall surface LS2 and the first reference point C1 in the first direction X may be configured in a more targeted manner. In some embodiments, for users with relatively small ears, to prevent the arch shape of the outer wall surface LS2 from causing the portion of the housing assembly 10 closer to the first end 102 to be too long and exert excessive pressure on the concha cavity 502 of the user, the distance L10 may be within a range from 14 millimeters to 16 millimeters. In some embodiments, for users with relatively large ears, to prevent the arch shape from causing the portion of the housing assembly 10 closer to the first end 102 to be too short, which causes the first end 102 not to properly abut against the concha cavity 502 and leads to instability, the distance L10 may be within a range from 18 millimeters to 20 millimeters. Specifically, the distance L10 between the apex G1 of the outer wall surface LS2 and the first reference point C1 in the first direction X may be 14.1 millimeters, 15.2 millimeters, 16.5 millimeters, 17.7 millimeters, 18.6 millimeters, or 19.9 millimeters.

Optionally, in the second direction Y, the outer wall surface LS2 of the side of the housing assembly 10 facing the ear portion of the user has a second reference point C2 adjacent to the second end 103 and closest to the ear portion of the user in the wearing state. In some embodiments, the second reference point C2 may be a point on a portion of the outer wall surface LS2 near the second end 103 and farthest from the apex G1 or a decorative cover (described later) in the second direction Y. To prevent the second end 103 from reliably supporting a facial region of the user when the first end 102 extends into the concha cavity 502, which reduces the wearing stability, a distance L12 between the second reference point C2 and the first reference point C1 in the first direction X is within a range from 20 millimeters to 31 millimeters. In addition, the second reference point C2 may also be a lowest point on the arched outer wall surface LS2 of the side of the housing assembly 10 facing the ear portion of the user. Optionally, the second reference point C2 is configured to abut against a facial skin on a front side of the antitragus 508 in the wearing state.

Furthermore, in order to adapt the earphone 100 to the ear shapes of the users, the distance L12 between the second reference point C2 and the first reference point C1 in the first direction X may be configured in a more targeted manner. In some embodiments, for the users with the relatively small ears, to prevent the first end 102 from properly abutting against the concha cavity 502 when the second reference point C2 supports the antitragus 508, the distance L12 between the second reference point C2 and the first reference point C1 in the first direction X may be within a range from 20 millimeters to 24 millimeters. In some embodiments, for the users with the relatively large ears, to prevent a region where the second reference point C2 is located from supporting the antitragus 508 and exerting the excessive pressure on the antitragus 508, the distance L12 between the second reference point C2 and the first reference point C1 in the first direction X may be within a range from 26 millimeters to 31 millimeters. Specifically, the distance L12 between the second reference point C2 and the first reference point C1 in the first direction X may be 21.9 millimeters, 23.4 millimeters, 25 millimeters, 26.4 millimeters, or 28.02 millimeters.

In this way, the earphone 100 can relatively stably support the facial region on the front side of the antitragus 508 through the second reference point C2. In addition, when the earphone 100 supports the facial region on the front side of the antitragus 508 through the second reference point C2, the first end 102 can further extend into the concha cavity 502, and not be prone to exerting excessive pressure on the antihelix 505.

Optionally, a distance H20 between the apex G1 of the outer wall surface LS2 and the second reference point C2 in the second direction Y is within a range from 1.3 millimeters to 2.2millimeters. Furthermore, in order to adapt the earphone 100 to the ear shapes of the users, the distance H20 between the apex G1 of the outer wall surface LS2 and the second reference point C2 in the second direction Y may be configured in a more targeted manner. Specifically, the distance H20 between the apex G1 of the outer wall surface LS2 and the second reference point C2 in the second direction Y may be 1.4millimeters, 1.5millimeters, 1.6millimeters, 1.7millimeters, 1.8millimeters, 1.9millimeters, 2.0millimeters, or 2. 1 millimeters. In this way, when the earphone 100 supports the facial region on the front side of the antitragus 508 of the user through the second reference point C2, the outer wall surface LS2 is not prone to exerting the excessive pressure on the antitragus 508.

Typically, constrained by a volume of the concha cavity 502, if a volume of the first end 102 is too large or a thickness of the first end 102 is too thick, it may be difficult for the first end 102 to insert into the concha cavity 502. Conversely, if the volume of the first end 102 is too small, an internal space of the housing assembly 10 may not be easy to use.

Optionally, the outer wall surface LS2 of the side of the housing assembly 10 facing the ear portion of the user has a third reference point C3 adjacent to the first end 102 and closest to the ear portion of the user along the second direction Y. In some embodiments, the third reference point C3 may be a point on a portion of the outer wall surface LS2 near the first end 102 and farthest from the apex G1 in the second direction Y. In some embodiments, the third reference point C3 may also be another lowest point on the arched outer wall surface LS2 of the side of the housing assembly 10 facing the ear portion of the user.

Optionally, a distance L13 from the third reference point C3 to the first reference point C1 along the first direction X is within a range from 3 millimeters to 5 millimeters. Furthermore, in order to adapt the earphone 100 to the ear shapes of the users, while increasing the internal space of the housing assembly 10, the distance L13 from the third reference point C3 to the first reference point C1 along the first direction X may be as small as possible without exerting the excessive pressure on the concha cavity 502. For example, the distance L13 from the third reference point C3 to the first reference point C1 along the first direction X may be within a range from 3 millimeters to 3.5 millimeters, a range from 3.51 millimeters to 4 millimeters, a range from 4.01 millimeters to 4.5 millimeters, or a range from 4.51 millimeters to 5 millimeters. Merely by way of example, the distance L13 from the third reference point C3 to the first reference point C1 along the first direction X may be 3.45 millimeters, 3.8 millimeters, 4.29 millimeters, or 4.53 millimeters. In this way, the first end 102 of the housing assembly 10 can more easily extend into the concha cavity 502, and the internal space of the housing assembly 10 can be conveniently utilized (e.g., for assembling the speaker 13).

If an inward depression level of the apex G1 of the outer wall surface LS2 towards the housing assembly 10 is too small, the outer wall surface LS2 may exert the excessive pressure on the antitragus 508 during the wearing. Conversely, if the inward depression level of the apex G1 of the outer wall surface LS2 towards the housing assembly 10 is too large, a curvature of the outer wall surface LS2 of the housing assembly 10 and a curvature of an inner wall surface LS1 (described later) corresponding to the outer wall surface LS2 may be too large, complicating the layout of components inside the housing assembly 10.

Optionally, the distance H30 from the apex G1 of the outer wall surface LS2 to the third reference point C3 along the second direction Y is within a range from 2 millimeters to 3 millimeters. For example, the distance H30 from the apex G1 of the outer wall surface LS2 to the third reference point C3 along the second direction Y may be 2.1 millimeters, 2.2 millimeters, 2.3 millimeters, 2.4 millimeters, 2.5 millimeters, 2.6 millimeters, 2.7 millimeters, 2.8 millimeters, or 2.9 millimeters. In this way, the outer wall surface LS2 can not exert the excessive pressure on the antitragus 508 during the wearing, and prevent excessive bending of the housing assembly 10.

A battery 14 and the speaker 13 in an existing earphone are typically disposed in two separate housings, requiring a relatively long connecting wire to connect the battery 14 and the speaker 13. During the assembly or use of the earphone 100 by the user, the connecting wire is prone to breakage under an external force, thereby disabling the earphone 100. In addition, disposing the battery 14 and speaker 13 in the two separate housings can increase an overall size of the earphone 100, thereby reducing the wear experience of the user.

In some embodiments, the earphone 100 further includes the battery 14. The battery 14 may be configured to supply power to the speaker 13. In the wearing state, since the first end 102 of the housing assembly 10 is closer to the external ear canal of the user's ear than the second end 103, the speaker 13 may be disposed at a position closer to the first end 102 within the housing assembly 10, and the battery 14 may be disposed at a position closer to the second end 103 within the housing assembly 10. In this way, the transmission of the air conduction sound from the speaker 13 to the external ear canal is facilitated, thereby ensuring the listening effect of the user.

In some embodiments, the speaker 13 and the battery 14 may be spaced apart along the first direction X within the accommodation space 101 formed by the housing assembly 10. In this way, the speaker 13 and the battery 14 can be assembled within the housing assembly 10, simultaneously, thereby improving the assembly efficiency, reducing a length of the connecting wire. Therefore, the connecting wire can be disposed in the housing assembly 10, which is not easily damaged.

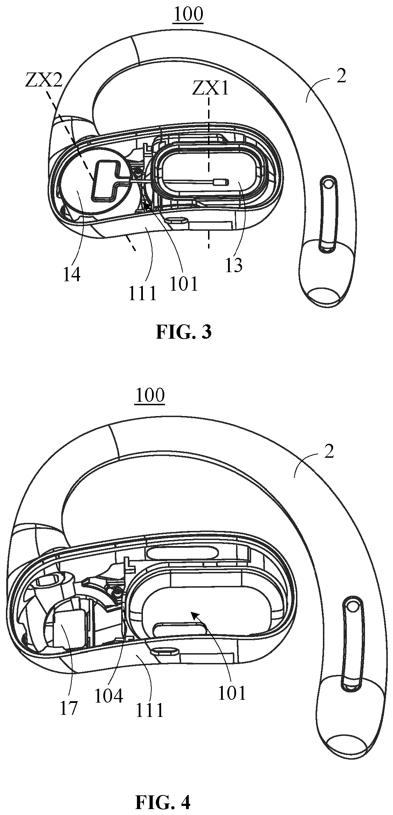

Furthermore, referring to FIG. 6, the accommodation space 101 of the housing assembly 10 may include a partition wall 104. The partition wall 104 may be configured to separate the speaker 13 and battery 14, thereby preventing the damage to the speaker 13 in case of a leakage of the battery 14, etc. In some embodiments, the partition wall 104 may be integrally formed with the housing assembly 10, thereby enhancing a structural consistency of the housing assembly 10. In some embodiments, the partition wall 104 may be separately molded and installed in the housing assembly 10 via clamping, glue, etc., thereby reducing the processing difficulty of the housing assembly 10. Merely by way of example, as shown in FIGs. 4 and 5, the partition wall 104 is disposed on the inner wall surface LS1 of the housing assembly 10 facing the ear portion of the user and adjacent to the apex G1 of the outer wall surface LS2. The speaker 13 is located in an accommodation space formed by the partition wall 104 and the first end 102, and the battery 14 is located in an accommodation space formed by the partition wall 104 and the second end 103.

In some embodiments, the speaker 13 has a first axis ZX1, and the battery 14 has a second axis ZX2. Each of the first axis ZX1 and the second axis ZX2 has a positive direction pointing toward the ear portion of the user in the wearing state. Within a reference plane defined by the first direction X and the second direction Y, projections of the positive directions of the first axis ZX1 and the second axis ZX2 within the reference plane are disposed crosswise. In other words, the speaker 13 and the battery 14 are inclined relative to each other. In this way, space utilization of the housing assembly 10 along the first direction X can be improved, thereby ensuring that the housing assembly 10 can accommodate various electronic components without increasing a volume of the housing assembly 10, thereby preventing oversizing the housing assembly 10 of the earphone 100 and affecting the wearing experience of the user. The first axis ZX1 refers to an axis parallel to a vibration direction of a diaphragm of the speaker 13 and passing through a center of gravity of the speaker 13 and a geometric center or a centroid of an end surface (e.g., a circular end surface or a racetrack-shaped end surface) of the speaker 13. The second axis ZX2 refers to an axis that passes through a symmetry axis of the battery 14, and through a geometric center or a centroid of two end surfaces of the battery 14.

Further, referring to FIG. 5, an intersection angle θ between the projections of the positive direction of the first axis ZX1 and the positive direction of the second axis ZX2 in the reference plane is an acute angle. In order to reduce a dimension of the housing assembly 10 along the first direction X, and prevent an excessively large inclination angle between the battery 14 and the speaker 13 and increasing the dimension of the housing assembly 10 along the second direction Y, the intersection angle θ between the projections of the positive direction of the first axis ZX1 and the positive direction of the second axis ZX2 in the reference plane may be within a range from 10 degrees to 14 degrees or a range from 11 degrees to 14 degrees. For example, the intersection angle θ between the projections of the positive direction of the first axis ZX1 and the positive direction of the second axis ZX2 in the reference plane may be 10 degrees, 10.5 degrees, 11 degrees, 11.5 degrees, 12 degrees, 12.5 degrees, 13 degrees, 13.5 degrees, or 14 degrees. In some embodiments, the first axis ZX1 and the second axis ZX2 may be parallel to the reference plane. In this case, an angle between the positive direction of the first axis ZX1 and the positive direction of the second axis ZX2 may be equal to the intersection angle θ.

In some embodiments, on the reference plane defined by the first direction X and the second direction Y, a radial dimension of the speaker 13 is greater than a radial dimension of the battery 14. The second direction Y has a positive direction pointing toward the ear portion of the user, and an intersection angle θ1 between the projection of the positive direction of the first axis ZX1 in the reference plane and the positive direction of the second direction Y is greater than an intersection angle θ2 between the projection of the positive direction of the second axis ZX2 in the reference plane and the positive direction of the second direction Y. In some embodiments, the second axis ZX2 may be disposed parallel to the second direction Y, which can reduce the assembly difficulty of the battery 14. The radial dimension of the speaker 13 refers to a length of a cross-section of the speaker 13 on the reference plane along a direction perpendicular to the first axis ZX1. The radial dimension of the battery 14 refers to a length of a cross-section of the battery 14 on the reference plane along a direction perpendicular to the second axis ZX2.

In this situation, since the radial dimension of the speaker 13 is larger than the radial dimension of the battery 14, if the speaker 13 and the battery 14 are disposed side by side along the first direction X, the speaker 13 may occupy a relatively large space along the first direction X. Therefore, when the speaker 13 is inclined with respect to the second direction Y, the speaker 13 has a greater impact on a variation degree of the projection length of the housing assembly 10 in the first direction X than that when the battery 14 is inclined with respect to the second direction Y, thereby reducing a length of the housing assembly 10 along the first direction X.

The earphone 100 further includes a circuit board 15. The circuit board 15 is disposed within the accommodation space 101 formed by the housing assembly 10, and located on a side away from the ear portion of the user relative to the speaker 13 and the battery 14. In some embodiments, a count of the circuit board 15 may be one, and the one circuit board 15 is connected to wires of the battery 14 and the speaker 13 for controlling the battery 14 and the speaker 13. At least a portion of a projection of the circuit board 15 along the second direction Y overlaps with the speaker 13 and the battery 14. Referring to FIG. 5, the circuit board 15 may be arranged along the first direction X. In this way, the space utilization can be increased and the production cost can be reduced, while ensuring the performance of the speaker 13 and the battery 14. In some embodiments, the count of the circuit board 15 may be two, and the two circuit boards 15 are electrically connected to the battery 14 and the speaker 13, respectively. Axes of the two circuit boards 15 may be parallel to the first axis ZX1 of the speaker 13 and the second axis ZX2 of the battery 14, respectively, thereby further reducing the volume of the housing assembly 10.

In some embodiments, the housing assembly 10 includes a first housing 111 and a second housing 112 that cooperate with each other along the second direction Y. The speaker 13 and the battery 14 may be fixed to the first housing 111, the first housing 111 is closer to the ear portion of the user in the wearing state with respect to the second housing 112, and the circuit board 15 is fixed on the second housing 112. In this situation, the assembly, disassembly, and repair of the earphone 100 can be facilitated. The circuit board 15 may be fixed on the second housing 112 of the housing assembly 10 through a hot melt manner. For example, the second housing 112 may be disposed with a plurality of thermal bonding posts, and the circuit board 15 may be disposed with a plurality of through-holes corresponding to the thermal bonding posts. During the assembly, the through-holes on the circuit board 15 cooperate with the thermal bonding posts on the second housing 112, and the circuit board 15 is fixed to the second housing 112 through the hot melt manner.

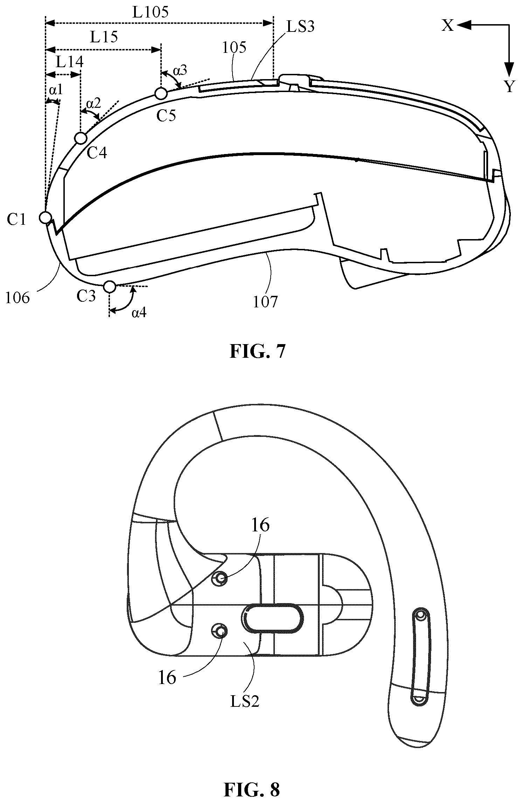

Referring to FIGs. 5 and 8, the earphone 100 further includes charging interfaces 16 disposed on the first housing 111 and magnetic elements 17 disposed between the battery 14 and the first housing 111 along the second axis ZX2. By disposing the magnetic elements 17 between the battery 14 and the first housing 111, the accommodation space 101 can be made full use, thereby improving the space utilization. In this way, the earphone 100 may be used in conjunction with a charging case 900 with a magnetic charging function.

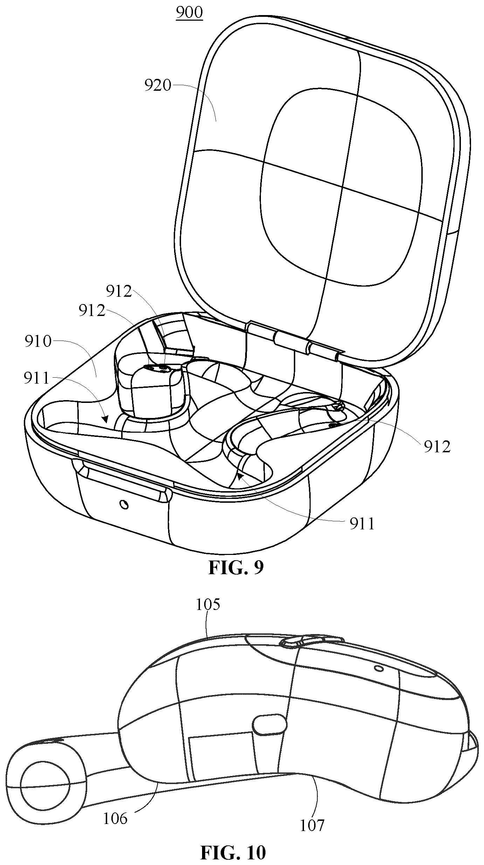

As shown in FIG. 9, the charging case 900 may include a lower housing assembly 910 and an upper housing assembly 920. The lower housing assembly 910 may be provided with two profiling recesses 911 for accommodating earphones 100, respectively. The upper housing assembly 920 may be capped over the lower housing assembly 910 to close the profiling recesses 911.

Furthermore, the charging case 900 may include a main control circuit board disposed within the lower housing assembly 910 and electrode terminals 912 disposed on the main control circuit board. A plurality of sets (e.g., two sets) of the electrode terminals 912 may be set as required. The electrical terminals 912 may be exposed from the profiling recesses 911. When any of the earphones 100 is placed into the charging case 900, the charging interfaces 16 in the earphone 100 may be in one-to-one contact with the electrode terminals 912 in the charging case 900, so as to satisfy functions of charging, detection, etc. Correspondingly, the electrode terminals 912 may include a power supply positive terminal and a power supply negative terminal. The electrode terminals 912 may further include a detection terminal. Lines connecting two of the electrode terminals 912 may form a triangle, e.g., a positive triangle. Alternatively, the lines may be spaced apart in a straight line, e.g., spaced apart from each other and collinear.

In addition, the charging case 900 may include magnetic suction structures (not shown) disposed within the lower housing assembly 910. A plurality of sets (e.g., two sets) of the magnetic suction structures may be set as required. After any of the earphones 100 is placed into the profiling recess 911, the magnetic suction structure and a magnetic element 17 within the earphone 100 may form a magnetic suction pair, so that the charging interfaces 16 are in one-to-one contact with the electrode terminals 912.

When the earphone 100 is in the wearing state, the first end 102 of the housing assembly 10 may need to extend into the concha cavity 502 of the user. Therefore, if the shape of the outer wall surface LS2 on the side of the first end 102 facing away from the ear portion of the user does not maintain a good fit with the concha cavity 502, the earphone 100 may increase the foreign body sensation of the user during the wearing, thereby reducing the user experience.

In some embodiments, the first direction X has a positive direction pointing from the second end 103 to the first end 102. The outer wall surface LS3 of the side of the housing assembly 10 facing away from the ear portion of the user may include a first arc-shaped transition region 105. On the reference plane defined by the first direction X and the second direction Y, a curvature radius of the first arc-shaped transition region 105 gradually approaches the ear portion of the user along the positive direction of the first direction X, so as to form a first portion of the first end 102. In this way, the outer wall surface of the housing assembly 10 can gradually bend toward the ear portion of the user, thereby better adapting to the shape of the concha cavity 502 and reducing the foreign body sensation of the user during the wearing.

As shown in FIG. 7, a curvature radius of the first arc-shaped transition region 105 gradually decreases along the positive direction of the first direction X. In this way, a side of the first arc-shaped transition region away from the ear portion of the user has a relatively large curvature radius, which facilitates the layout of the components inside the housing assembly 10.

Considering the inclined arrangement of the speaker 13 and battery 14, if an extension length of the first arc-shaped transition region 105 in the first direction X is too small, a portion of regions of the housing assembly 10 may have a relatively large dimension in the thickness direction, thereby reducing a space utilization of the interior of the housing assembly 10. In some embodiments, the extension length L105 of the first arc-shaped transition region 105 along the first direction X is not less than 16 millimeters. In this way, a thickness of each portion of the housing assembly 10 can be within a reasonable range, thereby improving the space utilization of the interior of the housing assembly 10.

As described above, the first end 102 has the first reference point C1 farthest from the second end 103 along the first direction X. The first reference point C1 has been described previously, which is not repeated herein. An angle α1 between a tangent line of the first arc-shaped transition region 105 at the first reference point C1 and the second direction Y is within a range from 5 degrees to 8 degrees. For example, the angle α1 between the tangent line of the first arc-shaped transition region 105 at the first reference point C1 and the second direction Y may be 5 degrees, 5.5 degrees, 6 degrees, 6.5 degrees, 7 degrees, 7.5 degrees, or 8 degrees. In some embodiments, referring to FIGs. 7 and 10, the first arc-shaped transition region 105 also has a first intermediate reference point C4. A distance L14 between the first intermediate reference point C4 and the first reference point C1 along the first direction X is within a range from 1.8 millimeters to 3 millimeters. An angle α2 between a tangent line of the first arc-shaped transition region 105 at the first intermediate reference point C4 and the second direction Y is within a range from 35 degrees and 53 degrees. In some embodiments, the first arc-shaped transition region 105 has a second intermediate reference point C5. A distance L15 between the second intermediate reference point C5 and the first reference point C1 along the first direction X is within a range from 6 millimeters to 9 millimeters. An angle α3 between a tangent line of the first arc-shaped transition region 105 and the second direction Y is within a range from 60 degrees to 80 degrees.

By sequentially defining a shape of the first arc-shaped transition region 105 at the first reference point C1, the first intermediate reference point C4, and the second intermediate reference point C5 as described above, the first arc-shaped transition region 105 can effectively adapt to the shape of the concha cavity 502 of the user.

In some embodiments, the distance L14 between the first intermediate reference point C4 and the first reference point C1 along the first direction X is 2.35 millimeters. The angle α2 between the tangent line of the first arc-shaped transition region 105 at the first intermediate reference point C4 and the second direction Y is 43.91 degrees. The distance L14 between the second intermediate reference point C5 and the first reference point C1 along the first direction X is 7.43 millimeters, and the angle α3 between the tangent line of the first arc-shaped transition region 105 at the second intermediate reference point C5 and the second direction Y is 70.8 degrees.

In some embodiments, a side of the housing assembly 10 facing the ear portion of the user has a third reference point C3 adjacent to the first end 102 and closest to the ear portion of the user along the second direction Y. The outer wall surface LS2 of the side of the housing assembly 10 facing the ear portion of the user includes a second arc-shaped transition region 106 located at a position between the first reference point C1 and the third reference point C3. The first direction X has a negative direction pointing from the first end 102 to the second end 103. The second arc-shaped transition region 106 gradually approaches the ear portion of the user along the negative direction of the first direction X, so as to form a second portion of the first end 102. Optionally, a curvature radius of the second arc-shaped transition region 106 gradually increases along the negative direction of the first direction X and gradually approaches the ear portion of the user, so as to form the second portion of the first end 102.

In this way, the shape of the first end 102 can be better fitted with an internal shape of the concha cavity, thereby reducing the foreign body sensation when the first end 102 extends into the concha cavity 502, and improving the wearing experience of the user.

In some embodiments, the distance L13 between the third reference point C3 and the first reference point C1 along the first direction X is within a range of 3 millimeters to 6 millimeters. Optionally, the angle α4 between the tangent line of the second arc-shaped transition region 106 at the third reference point C3 and the second direction Y is within a range from 75 degrees to 95 degrees.

In some embodiments, the distance L13 between the third reference point C3 and the first reference point C1 along the first direction X is 4.29 millimeters, and the angle α4 between the tangent line of the second arc-shaped transition region 106 at the third reference point C3 and the second direction Y is 84.9 degrees.

By defining a projected length between the third reference point C3 and the first reference point C1 along the first direction X, a projected length between the third reference point C3 and the first reference point C1 along the second direction Y, and a slope of the second arc-shaped transition region 106 between the third reference point C3 and the first reference point C1, respectively, the second arc-shaped transition region 106 can better adapt to the interior of the concha cavity 502 of the user, thereby reducing the foreign body sensation.

Furthermore, the outer wall surface LS2 of the side of the housing assembly 10 facing the ear portion of the user further includes a third arc-shaped transition region 107 located on a side of the third reference point C3 facing away from the first reference point C1. The third arc-shaped transition region 107 is disposed in an arch shape away from the ear portion of the user. A distance L10 from an apex G1 of the third arc-shaped transition region 107 to the first reference point C1 along the first direction X is within a range from 15 mm to 18 mm. A distance H10 from the apex G1 of the third arc-shaped transition region 107 to the first reference point C1 along the second direction Y to the first reference point C1 is within a range from 1 millimeter to 3 millimeters.

In some embodiments, the distance L10 from the apex G1 of the third arc-shaped transition region 107 to the first reference point C1 along the first direction X is 17.7 millimeters, and the distance H10 from the apex G1 of the third arc-shaped transition region 107 to the first reference point C1 along the second direction Y to the first reference point C1 is 1.91 millimeters. In this way, during the wearing of the earphone 100, the apex G1 of the third arc-shaped transition region 107 is approximately located on an outer side of the antitragus 508 of the user, thereby reducing a likelihood of excessive pressure on the antitragus 508.

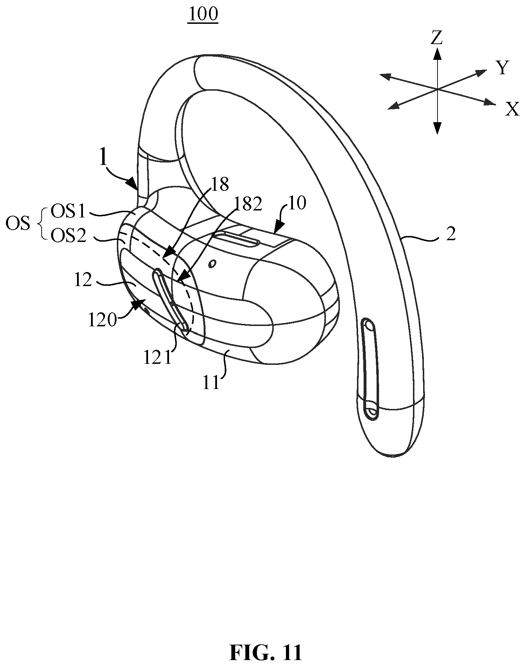

As shown in FIG. 11, as described above, the host module 1 may include the housing assembly 10. The host module 1 may further include the speaker 13, the battery 14, etc.

Optionally, as shown in FIG. 11, the housing assembly 10 may include an outer housing 11 and a decorative cover 12. The outer housing 11 has an outer surface OS1 facing away from the ear portion of the user in the wearing state, and the decorative cover 12 is disposed on the outer surface OS1 of the outer housing 11 to form a touch positioning region 120 for the user to perform touch positioning. The host module 1 may further include a touch control module 18. The touch control module 18 is disposed on the outer housing 11 and has a touch detection region 182 that at least partially overlaps with the touch positioning region 120. When the user touches a region on the decorative cover 12 corresponding to the touch detection region 182, the touch operation may be detected by the touch detection region 182.

The touch positioning region 120 may be configured to position the touch detection region 182. When the user perceives the touch positioning region 120, the user may roughly determine that a touchable region has been reached or approached. The touch detection region 182 may detect the touch operation of the user. The touch control module 18 may detect the touch operation of the user through the touch detection region 182, so as to realize touch sensing and human-computer interaction functions between the earphone 100 and the user. For example, the human-computer interaction functions may include volume adjustment, power on/off control, song switching, playback, pause, etc. In addition, the touch control module 18 may enable operations, such as, Bluetooth connection or disconnection operations, switching Bluetooth-connected devices, etc.

Furthermore, a positioning protrusion 121 may be disposed on the outer housing 11 and/or the decorative cover 12. The positioning protrusion 121 is located within the touch positioning region 120 and protrudes outward from the outer surface OS1 of the decorative cover 12 facing away from the outer housing 11. On the basis of providing a primary touch navigation and positioning via the touch positioning region 120, the positioning protrusion 121 is designed to protrude outward from the outer surface OS1 of the decorative cover 12 facing away from the outer housing 11. This allows the user easily feel the positioning protrusion 121 when touching the outer housing 11. Thus, the positioning protrusion 121 can provide secondary touch navigation and positioning in addition to the decorative cover 12. As a result, the user can more accurately locate the touch detection area 182 via the positioning protrusion 121, thereby improving the convenience of the touch operations. Furthermore, the decorative cover 12 may cause the earphone 100 to have a unique visual decorative effect. When the decorative cover 12 is combined (at least partially overlaps) with the touch detection region 182 while maintaining its unique visual decorative effect, there is no need for an additional dedicated touch detection region, thereby reducing the volume of the earphone 100. The visual decorative effect of the decorative cover 12 can also help the user to intuitively identify a position of the touch detection region 182, thereby lowering a learning cost of the user and enhancing the convenience of the touch operations.

In some implementations, as shown in FIG. 11, the outer surface OS1 of the outer housing 11 and an outer surface OS2 of the decorative cover 12 jointly form an outer surface OS of the host module 1. The outer surface OS of the host module 1 is disposed in an arch shape arched outwardly. In other words, the outer surface OS1 of the outer housing 11 and the outer surface OS2 of the decorative cover 12 are jointly disposed in the arch shape arched outwardly. In this way, lateral space utilization of the earphone 100 can be increasing, which facilitates the arrangement of other components inside the housing assembly 10. The outward arch-shaped design visually enhances the compactness of the host module 1 on the outer surface OS.

In some embodiments, as shown in FIG. 11, the first direction X and the second direction Y of the housing assembly 10 are also the first direction X and the second direction Y of the outer housing 11. The outer housing 11 has a length direction X, a width direction Z, and a thickness direction Y that are orthogonal to each other. The outer housing 11 is configured to stack on the ear portion of the user along the thickness direction Y in the wearing state. Specifically, the length direction X is indicated by an arrow X as shown in FIG. 11, the thickness direction Y is indicated by an arrow Y as shown in FIG. 11, and the width direction Z is indicated by an arrow Z as shown in FIG. 11, and the length direction X, the width direction Y, and the thickness direction Z are orthogonal to each other.

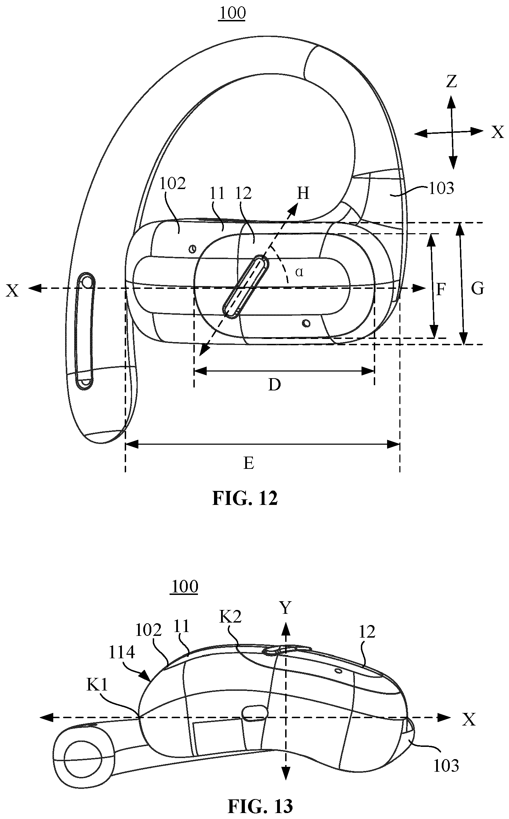

In some embodiments, as shown in FIG. 12, a ratio of a dimension of the decorative cover 12 along the length direction X to a dimension of the outer housing 11 along the length direction X may be greater or equal to 0.5 and less than or equal to 0.8. The dimension of the decorative cover along the length direction X is denoted as a length D in FIG. 12, and the dimension of the outer housing along the length direction X is denoted as a length E in FIG. 12. The ratio of the length D to the length E is greater or equal to 0.5 and less than or equal to 0.8 (i.e., 0.5≤D/E≤0.8). For example, the ratio of the dimension of the decorative cover 12 to the dimension of the outer housing 11 along the length direction X may be 0.6 or 0.7. Preferably, the ratio of the dimension of the decorative cover 12 to the dimension of the outer housing 11 along the length direction X may be greater or equal to 0.6 and less than or equal to 0.7.

Optionally, a ratio of a dimension of the decorative cover 12 along the width direction X to a dimension of the outer housing 11 along the width direction X may be greater or equal to 0.6 and less than or equal to 0.95. The dimension of the decorative cover along the width direction Z is denoted as a length F in FIG. 12, and the dimension of the outer housing along the width direction Z is denoted as a length G in FIG. 12. The ratio of the length F to the length G is greater or equal to 0.5 and less than or equal to 0.8 (i.e., 0.6≤F/G≤0.95). For example, the ratio of the dimension of the decorative cover 12 along the width direction Z to the dimension of the outer housing 11 along the width direction Z may be 0.65 or 0.75. Optionally, the ratio of the dimension of the decorative cover 12 along the width direction Z to the dimension of the outer housing 11 along the width direction Z may be greater or equal to 0.7 and less than or equal to 0.87.

By disposing the ratios of the dimensions of the decorative cover 12 to the dimensions of the outer housing 11 within the ranges, the decorative cover 12 can occupy a relatively large portion of the outer surface OS1 of the outer housing 11, which facilitates that the user touches the decorative cover 12 when the user touches the outer surface OS1 of the outer housing 11.

In alternative embodiments, the ratios of the dimensions of the decorative cover 12 to the dimensions of the outer housing 11 may also be other dimension ratios. For example, the ratio of the dimension of the decorative cover 12 to the dimension of the outer housing 11 along the length direction X may be greater or equal to 0.3 and less than or equal to 0.8, and the ratio of the dimension of the decorative cover 12 along the width direction Z to the dimension of the outer housing 11 along the width direction Z may be greater or equal to 0.4 and less than or equal to 0.9, which are not listed herein.

As shown in FIG. 12, the positioning protrusion 121 may be disposed in a strip shape, and an extension direction H of the positioning protrusion 121 intersects with the length direction X and the width direction Z.

The extension direction H of the positioning protrusion 121 is indicated by an arrow H as shown in FIG. 12. In this way, when the user's hand touches the outer housing 11, the positioning protrusion intersecting with the length direction X and the width direction Z can provide clearly tactile sense for the user, thereby facilitating the touch positioning for the user, and providing the user with the secondary touch navigation and positioning more distinctly.

Optionally, the extension direction H of the positioning protrusion 121 is not parallel to the length direction X and the width direction Z of the outer housing 11, and forms an acute angle with the length direction X of the outer housing 11. The acute angle between the extension direction H of the positioning protrusion 121 and the length direction X of the outer housing 11 is donated as an angle α shown in FIG. 12.

Optionally, the angle between the extension direction H of the positioning protrusion 121 and the length direction X of the outer housing 11 may be within a range from 30 degrees to 70 degrees. For example, the angle between the extension direction H of the positioning protrusion 121 and the length direction X of the outer housing 11 may be 40 degrees, 50 degrees, or 60 degrees. In this way, the positioning protrusion 121 is more easily to be touched and identified by the user.

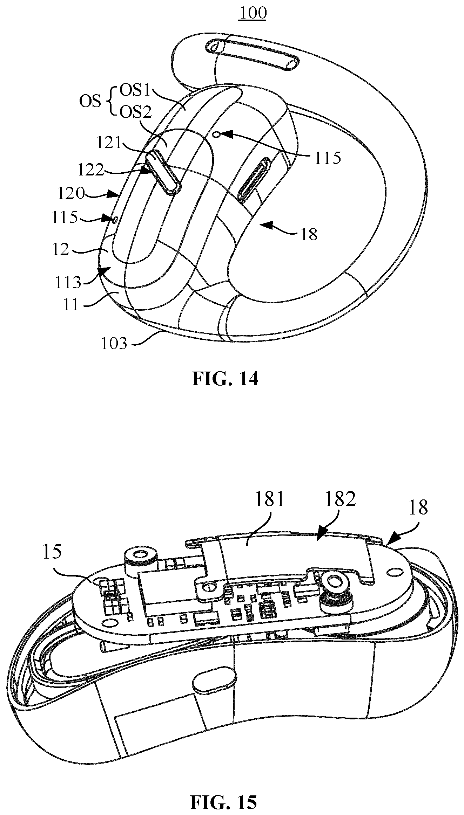

In some embodiments, as shown in FIGs. 12 and 14, the outer housing 11 may have a connection end 103 (also referred to as the second end 103 in some descriptions herein) connected to the ear hook 2 and a free end 102 (also referred to as the first end 102 in some descriptions) facing away from the connection end 103 in the length direction X. The outer housing 11 may be bent toward the outer surface OS1 of the outer housing 11 along the thickness direction Y. Therefore, the free end 102 is closer to an ear hole of the user than the connection end 103, and the decorative cover 12 is closer to the connection end 103. When the earphone 100 is worn on an ear, the free end 102 is closer to the ear and the connection end 103 connected to the ear hook 2 is farther from the ear. Therefore, the decorative cover 12 is disposed closer to the connection end 103, which facilitates the user to touching the decorative cover 12.

In some embodiments, as shown in FIGs. 13 and 14, the outer housing 11 may bend toward the outer surface OS1 of the outer housing 11 along the thickness direction Y, such that the free end 102 is closer to the ear hole than the connection end 103. In this way, the decorative cover 12 is located in a region parallel to a human sagittal plane as much as possible when the earphone 10 is in the wearing state, and an area where the decorative cover 12 is located within a bending surface region that extends into the ear hole is reduced. As a result, it facilitates intuitive blind operation and allows the user to quickly locate the positioning protrusion 121.

As illustrated in FIG. 13, the free end 102 may include a first reference position K1 farthest from the connection end 103 in the length direction X, and the decorative cover 12 may include a second reference position K2 closest to the first reference position K1 in the length direction X. In the wearing state, at least a portion of the free end 102 may insert into the concha cavity 502.

The outer housing 11 has an arc-shaped transition region 114 between the first reference position K1 and the second reference position K2. The arc-shaped transition region 114 gradually approaches the ear portion of the user along the thickness direction Y in the wearing state. Therefore, when the earphone 100 is in the wearing state, a portion of the earphone 100 corresponding to the arc-shaped transition region 114 may gradually approach or even fit with the ear portion of the user along the thickness direction Y, which facilitates that the free end 102 extends into the concha cavity 502, thereby enhancing the wearing comfort and the stability of the earphone 100. Furthermore, the arc-shaped transition region 114 begins from the second reference point K2 of the decorative cover 12 and gradually inclines toward the first reference point K1. Therefore, the second reference point K2 can serve as a turning point, so that the user can more effectively position the decorative cover 12 and the touch positioning region 120, thereby improving the convenience of the touch operations. In addition, an edge of the decorative cover 12 is adjacent to a dividing point at which the outer housing 11 turns, which facilitates the user to identifying and positioning the decorative cover 12 during the blind operation.

In some embodiments, a roughness of the outer surface OS2 of the decorative cover 12 is greater than a roughness of the outer surface OS1 of the outer housing 11. In this way, when the user touches the outer surface OS2 of the decorative cover 12 and the outer surface OS1 of the outer housing 11, the difference in the roughness can bring a tactile difference to the user. Therefore, the decorative cover 12 and the outer housing 11 can be distinguished easily, which facilitates the user to positioning the touch detection region 182 and performing the touch operations, thereby improving the convenience of the touch operations.

In some embodiments, a color of the outer surface OS2 of the decorative cover 12 is different from a color of the outer surface OS1 of the outer housing 11. For example, the color of the outer surface OS2 of the decorative cover 12 may be red, blue, etc., and the color of the outer surface OS1 of the outer housing 11 may be white, black, etc., which facilitates the user to visually distinguishing the decorative cover 12 and the outer housing 11. By disposing the color of the outer surface OS2 of the decorative cover 12 different from the color of the outer surface OS1 of the outer housing 11, a color difference can be generated on the outer surface OS of the host module 1, which visually miniaturizes the outer surface OS of the host module 1, thereby enhancing the visual effect of the earphone 100 and realizing a visual compactness. In addition, the color difference between the outer surface OS2 of the decorative cover 12 and the outer surface OS1 of the outer housing 11 can allow the user to clearly position the touch detection region 182, thereby reducing the learning cost and improving the touch efficiency.

In some embodiments, a material of the decorative cover 12 may be different from a material of the outer housing 11. For example, the material of the decorative cover 12 may be a transparent acrylic plate, and the material of the outer housing 11 may be a metal material. Alternatively, the material of the decorative cover 12 may be a metal material, and the material of the outer housing 11 may be made by plastic, resin, etc. By disposing the material of the decorative cover 12 different from the material of the outer housing 11, it facilitates the user to distinguishing the decorative cover 12 and the outer housing 11. Furthermore, the difference in the materials can enhance a decorative effect of the decorative cover 12 and provide the user with a different tactile feel, which in turn facilitates the touch operations and improves the convenience of the touch operations.

In some embodiments, as shown in FIG. 14, at least a portion of the edge of the decorative cover 12 may be exposed to the outer surface OS1 of the outer housing 11, so as to form the touch positioning region 120. The touch positioning region 120 may be defined by the portion of the edge of the decorative cover 12 exposed to the outer side surface OS1 of the outer housing 11. When the user touches the outer surface OS1 of the outer housing 11, the user may touch the exposed edge of the decorative cover 12. Since the edge provides a tactile sense for the user, the user can clearly recognize that a region corresponding to the edge has been touched, thereby effectively serving as navigation and positioning functions.

Optionally, the edge of the decorative cover 12 may be disposed in a ring and entirely exposed to the outer surface OS1 of the outer housing 11, so as to form the touch positioning region 120. The edge of the decorative cover 12 surrounds the positioning protrusion 121. In other words, the entire edge of the decorative cover 12 is exposed to the outer surface OS1 of the outer housing 11, allowing the user to touch the entire edge of the decorative cover 12, thereby improving the positioning effect and further enhancing the touch efficiency. In addition, the positioning protrusion 121 is disposed at a center position of the decorative cover 12 and not close to the edge of the decorative cover 12. In this way, the positioning protrusion 121 can be more stable and not prone to dropping from the touch positioning region 120 defined by the decorative cover 12.

In some embodiments, as shown in FIG. 14, a positioning groove 113 may be provided on the outer side surface OS1 of the outer housing 11, and the decorative cover 12 is accommodated within the positioning groove 113 through a groove opening of the positioning groove 113.

Optionally, a shape and a size of the positioning groove 113 may match a shape and a size of the decorative cover 12, which facilitates that the decorative cover 12 is assembled into the positioning groove 113 of the outer housing 11, and makes a seam between the positioning groove 113 and the decorative cover 12 more uniform, thereby providing more delicate and smoother tactile sense.

Optionally, the seam between the edge of the decorative cover 12 and the edge of the groove opening of the positioning groove 113 is exposed to the outer side surface and surrounds the positioning protrusion 121. The seam formed between the edge of the decorative cover 12 and the edge of the groove opening of the positioning groove 113 can provide a tactile sense that is clearly distinguishable from other regions. When the user touches the seam, the user can quickly and effectively recognize that a region corresponding to the seam has been touched, thereby improving the touch efficiency.

In some embodiments, the positioning protrusion 121 may protrude from the outer surface OS1 of the outer housing 11, the decorative cover 12 is provided with a positioning hole 122, and the positioning protrusion 121 is threaded through which the positioning hole 122. Through the positioning hole 122 and the positioning protrusion 121, the decorative cover 12 and the outer surface OS1 of the outer housing 11 can be assembled precisely, thereby improving the accuracy of the positioning of the touch detection region 182. Furthermore, a cooperation between the positioning groove 113 and the positioning protrusion 121 can further enhance the assembly accuracy between the decorative cover 12 and the outer housing 11, which enables the touch positioning region 120 to provide more accurate positioning for the touch detection region 182, thereby improving the precision and the convenience of the touch operations.

Optionally, the positioning protrusion 121 may protrude from the outer surface OS2 of the decorative cover 12 and be integrally formed with the decorative cover 12. In this way, the positioning protrusion 121 can be more stable and not be prone to detaching from the decorative cover 12. Moreover, a relative position between the positioning protrusion 121 and the touch positioning region 120 is fixed, thereby improving the accuracy of the primary and secondary touch navigation and positioning of the user.

Optionally, at least two sound pickup holes 115 may be provided on the outer surface OS of the host module 1. The two sound pickup holes 115 may be located on two opposite slopes of the outer surface OS of the host module 1, respectively. By disposing the two sound pickup holes 115 on the two opposite slopes, the two sound pickup holes can point to different directions, thereby expanding a sound pickup range of the earphone 100. Moreover, the different directions of the two sound pickup holes can reduce mutual interference between the two sound pickup holes 115.

In some embodiments, the positioning protrusion 121 may be disposed in a strip shape, and the two sound pickup holes 115 are located on opposite sides of the positioning protrusion 121, respectively. In this way, the mutual interference between the two sound pickup holes 115 can be reduced.

A positional relationship between the touch detection region 182 and the positioning protrusion 121 may include various manners.

Manner 1: optionally, the touch detection region 182 may surround the positioning protrusion 121, so that the user touches the positioning protrusion 121 to precisely position and determine the position of the touch detection region 182. Therefore, the user can quickly and accurately position the position of the touch detection region 182 when using the earphone 100, thereby optimizing the user experience.

Manner 2: the touch detection region 182 may be located closer to the connection end 103 than the positioning protrusion 121, which facilitates the user to sensing the trigger of the touch detection region 182. Alternatively, the touch detection region 182 may surround the positioning protrusion 121, which facilitates the user to precisely positioning the touch detection region 182 via the positioning protrusion 121 and triggering the touch module 18.

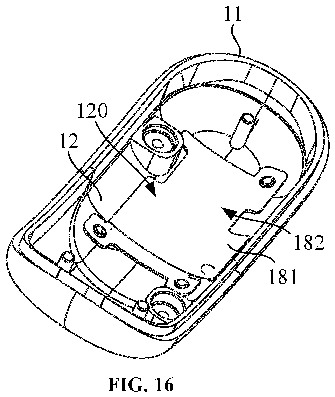

In some embodiments, as shown in FIGs. 15 to 16, the touch module 18 may include a touch metal pattern 181 and the circuit board 15. The circuit board 15 may be disposed inside the outer housing 11, and the touch metal pattern 181 may be disposed inside the outer housing 11 or sandwiched between the decorative cover 12 and the outer housing 11. The touch metal pattern 181 is electrically connected to the circuit board 15 and configured to form the touch detection region 182.

When the user touches and/or presses the touch positioning region 120 or the positioning protrusion 121, the touch metal pattern 181 forming the touch detection region 182 may be triggered and sensed, so that the touch metal pattern 181 generates a corresponding signal. The corresponding signal may be transmitted to the circuit board 15 to further trigger a corresponding functional response.

In some embodiments, the touch metal pattern 181 may be configured as a radio frequency (RF) antenna of the earphone 100. The earphone 100 may receive and transmit an RF signal via the touch metal pattern 181, thereby enriching the functionality of the earphone 100 and facilitating information interaction between the earphone 100 and other devices.

Of course, a count of the sound pickup holes 115 may be at least one. The at least one sound pickup hole 115 penetrates the outer housing 11 and communicates the accommodation space 101 and the external environment. Correspondingly, the host module 1 may further include a microphone 19. The microphone 19 is disposed within the accommodation space 101 and corresponds to the at least one sound pickup hole 115, so as to pick up a sound from the external environment through the at least one sound pickup hole 115.

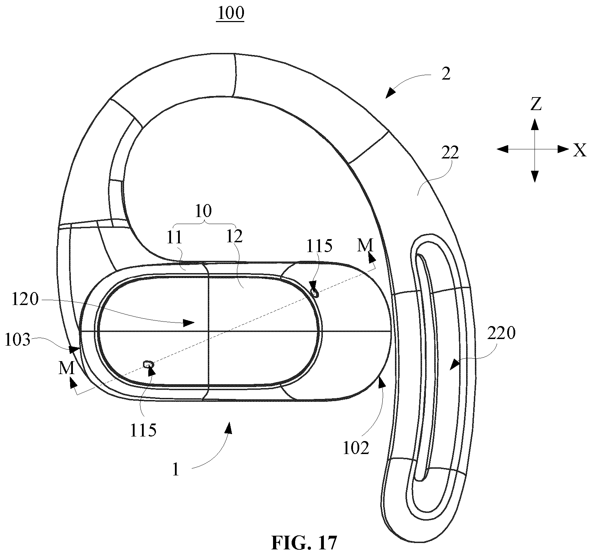

Optionally, as shown in FIGs. 17 to 20, the host module 1 may be provided with the at least two sound pickup holes 115 that communicate the accommodation space 101 and the external environment. The host module 1 may further include at least two microphones 19. The at least two microphones 19 are spaced apart and disposed within the accommodation space 101, and each of the at least two microphones 19 corresponds to one of the at least two sound pickup holes 115. Taking two sound pickup holes 115 as an example, one of the two sound pickup holes 115 may penetrate the outer housing 11 and located at the periphery of the decorative cover 12. The another sound pickup hole 115 may penetrate the outer housing 11 and the decorative cover 12. That is, the another sound pickup hole 115 is located within a range enclosed by the edge of the decorative cover 12. Correspondingly, the accommodation space 101 may be disposed with two microphones 19, and each of the two microphones 19 corresponds to one of the two sound pickup holes 115.

By providing the at least two sound pickup holes 115, a sound pickup range of the earphone 100 can be expanded and sound pickup quality can be improved. Moreover, since one of the two sound pickup holes 115 is located at the periphery of the decorative cover 12 and the another sound pickup hole 115 is located within the range enclosed by the edge of the decorative cover 12, a likelihood that the two sound pickup holes are simultaneously blocked when the user touches the decorative cover 12 is reduced, thereby reducing the impact on the sound pickup effect.

Optionally, taking two sound pickup holes 115 as an example, a distance between the two sound pickup holes 115 is greater than or equal to a dimension of the decorative cover 12 along an arrangement direction of the two microphones 19. Since one of the two sound pickup holes 115 is located outside the decorative cover 12, the another sound pickup hole 115 can be located at the edge of the decorative cover 12 as close as possible. Therefore, the distance between the two sound pickup holes 115 can be relatively large, so that when the touch positioning region 120 of the decorative cover 12 is touched, the sound pickup hole 115 located outside the decorative cover 12 is not prone to being blocked, and the sound pickup hole 115 near the edge of the decorative cover 12 is also not prone to being blocked. Thus, the likelihood that the two sound pickup holes are simultaneously blocked when the decorative cover 12 is touched can be reduced, thereby reducing the impact on the sound pickup effect.

Optionally, as shown in FIG. 17, the touch positioning region 120 is located between the two sound pickup holes 115. In this way, the two sound pickup holes are not prone to being blocked when the touch positioning region 120 is touched , thereby reducing the impact on the sound pickup effect.

Optionally, the arrangement direction of the two sound pickup holes 115 intersects with the length direction X and the width direction Z of the outer housing 11. The sound pickup hole 115 that penetrates the decorative cover 12 (i.e., the sound pickup hole 115 located within the range enclosed by the edge of the decorative cover 12) is closer to the connection end 103 and also closer to the edge of the decorative cover 12 that is farther away from the ear hook 2 in the width direction Z, with respect to the sound pickup hole 115 located outside the decorative cover 12. By disposing the sound pickup hole 115 at a "lower-left" position, the sound pickup hole 115 that penetrates the decorative cover 12 can be closer to a mouth portion of the user and the speaker 13, so as to clearly pick up a voice of the user and the sound from the speaker 13, which facilitates noise reduction processing and enhances the sound pickup quality from the external environment. On the other hand, the sound pickup hole 115 is closer to the edge of the decorative cover 12 that is farther away from the ear hook 2 in the width direction Z, thereby reducing the probability that the sound pickup hole 115 is blocked when the decorative cover 12 is touched.

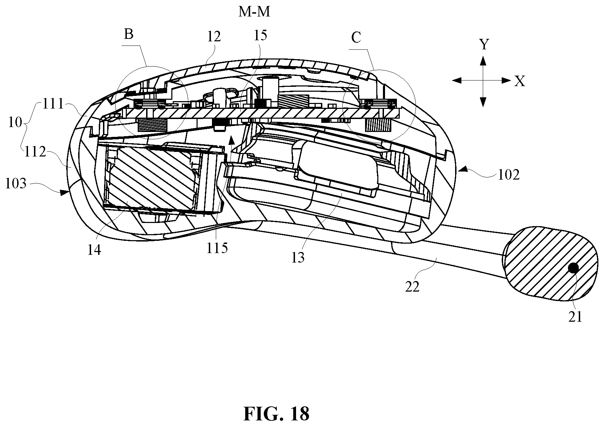

Optionally, as shown in FIGs. 18 to 20, the host module 1 may further include a sealing assembly 190. At least a portion of the sealing assembly 190 is disposed at a position between the outer housing 11 and the microphone 19. The sealing assembly 190 is used to isolate a sound pickup path from the accommodation space 101. Therefore, the sound pickup path is sealed with respect to a portion of the accommodation space 101 located outside the sound pickup path, thereby reducing the impact of dust, moisture, etc. entering the sound pickup path through the sound pickup hole 115 on other electrical components in the accommodation space 101.

Optionally, the host module 1 may further include a fixing plate for fixing the microphone 19. Optionally, the fixing plate may be the circuit board 15. Alternatively, in other embodiments, the fixing plate may be a plate-like structural member other than the circuit board 15, or a portion of the housing assembly 10. The fixing plate may be configured to fix the microphone 19 and other components.

As shown in FIGs. 18 to 20, the fixing plate is accommodated within the accommodation space 101 and provided with a through-hole 151. The microphone 19 is fixed to a side of the fixing plate and covers the through-hole 151. At least a portion of the sealing assembly 190 is disposed within the accommodation space 101 and abuts against a position between the outer housing 11 and a side of the fixing plate facing away from the microphone 19, such that the through-hole 151 is in communication with the sound pickup hole 115. In this way, the installation stability and the sealing performance of the sealing assembly 190 can be improved.

The sealing assembly 190 may cooperate with components (e.g., the outer housing 11, etc.) in various structures. For example, the various structures may be determined for different installation structures or positions of the microphone 19.

In some embodiments, for the sound pickup hole 115 penetrated the outer housing 11 and located at the periphery of the decorative cover 12, a structure and relevant descriptions of the sealing assembly 190 are as follows.

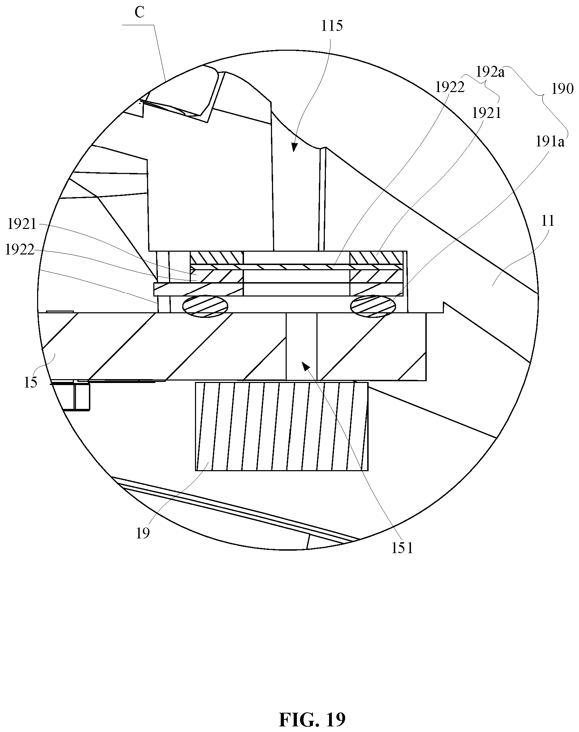

As shown in FIGs. 18 and 19, the microphone 19 may penetrate the outer housing 11 and be located at the periphery of the decorative cover 12. The sealing assembly 190 may include a sealing ring 191a and a mesh assembly 192a. The sealing ring 191a and the mesh assembly 192a are stacked. The sealing ring 191a and the mesh assembly 192a are disposed within the accommodation space 101 and located between the fixing plate and the outer housing 11. Since the microphone 19 is located at the periphery of the decorative cover 12 and penetrates the outer housing 11, the outer housing 11 has a relatively good integrity and unity. Therefore, by stacking the sealing ring 191a and the mesh assembly 192a between the fixing plate and the outer housing 11, a better sealing performance can be achieved based on the well-integrated outer housing 11. In addition, stacking the sealing ring 191a and the mesh assembly 192a can achieve a relatively thick sealing assembly 190, thereby sealing the sealing assembly 190 between the outer housing 11 and the fixing plate more snugly. The mesh assembly 192a also reduces the dust, the impurities, etc., into the accommodation space 101, thereby further enhancing the sealing performance.

Optionally, the sealing ring 191a is stacked on the fixing plate and is closer to the through-hole 151 than the mesh assembly 192a. The mesh assembly 192a is located between the sealing ring 191a and the outer housing 11, and is closer to the sound pickup hole 115 than the sealing ring 191a. In this way, disposing the mesh assembly 192a in front of the sealing ring 191a (i.e., closer to the sound pickup hole 115) can reduce the dust, the impurities, etc., to enter and stack into the sealing ring 191a, thereby preventing the dust, the impurities, the moisture, etc., entering the accommodation space 101 as early as possible.

In other embodiments, for the sound pickup hole 115 that penetrates the outer housing 11 and the decorative cover 12, a structure and relevant descriptions of the sealing assembly 190 are as follows.

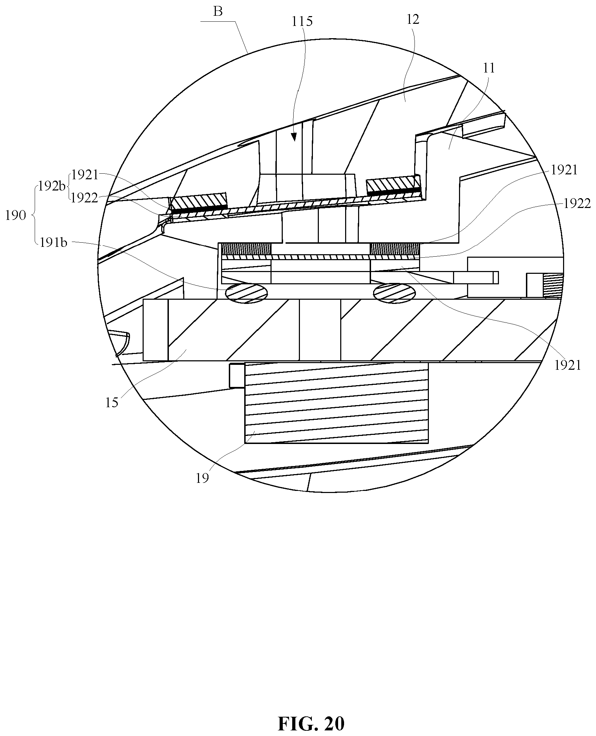

As shown in FIG. 20, the microphone 19 may penetrate the outer housing 11 and the decorative cover 12. The sealing assembly 190 may include a sealing ring 191b and at least one mesh assembly 192b. The sealing ring 191b is disposed within the accommodation space 101 and between the outer housing 11 and the fixing plate, and directly abuts against the outer housing 11 and the fixing plate. The at least one mesh assembly 192b is disposed at a position between the outer housing 11 and the decorative cover 12. As a cooperation between the decorative cover 12 and the outer housing 11 and a cooperation between the sealing assembly 190 and the fixing plate is prone to accumulating large errors, the sealing ring 191b which has a relatively strong deformation capability is connected to the fixing plate, which can reduce a fitting error between the decorative cover 12 and the outer housing 11 and a fitting error between the sealing assembly 190 and the fixing plate, thereby ensuring the sealing performance of electronic components.

Optionally, a count of the at least one mesh assembly 192b may be two. One of the two mesh assemblies 192b is disposed at a position between the outer housing 11 and the decorative cover 12, and another mesh assembly 192b is stacked with the sealing ring 191b within the accommodation space 101 and located between the outer housing 11 and the fixing plate.

By disposing the mesh assembly 192b between the outer housing 11 and the decorative cover 12, the dust, the impurities, the moisture, etc., entering the accommodation space 101 can be reduced at an earlier point. The mesh assembly 192b can seal the sound pickup hole 115 between the outer housing 11 and the decorative cover 12. This reduces the entry of the moisture through the sound pickup hole 115 into a space between the outer housing 11 and the decorative cover 12, thereby improving the connection stability between the outer housing 11 and the decorative cover 12. By disposing the sealing ring 191b inside the accommodation space 101 and sealing the sealing ring 191b between the outer housing 11 and the fixed plate, the sealing performance is further enhanced, and the leakage of the moisture, etc., from the sound pickup hole 115 into the accommodation space 101 can be reduced, thereby preventing adverse effects on other electronic components inside the accommodation space 101.

Merely by way of example, structures of the mesh assembly 192a and the mesh assembly 192b may be as follows.

As shown in FIGs. 19 to 20, each of the mesh assembly 192a and the mesh assembly 192b includes an annular double-sided adhesive 1921 and a mesh 1922. The annular double-sided adhesive 1921 is stacked and bonded with the mesh 1922. Specifically, a side of the annular double-sided adhesive 1921 may be bonded to the mesh 1922, and another side of the annular double-sided adhesive 1921 may be bonded to the outer housing 11 or the decorative cover 12 adjacent to the annular double-sided adhesive 1921. For example, for the sound pickup hole 115 that penetrates the outer housing 11 and the decorative cover 12, a side of the annular double-sided adhesive 1921 may be bonded to the mesh 1922, and another side of the annular double-sided adhesive 1921 may be bonded to the outer housing 11. For the sound pickup hole 115 that penetrates the outer housing 11 and is located at the periphery of the decorative cover 12, a side of the annular double-sided adhesive 1921 may be bonded to the mesh 1922, and another side of the annular double-sided adhesive 1921 may be bonded to the outer housing 11. The mesh 1922 may be disposed opposite to the sound pickup hole 115 and the through-hole 151, so as to effectively reduce the impurities, the dust, etc., into the accommodation space 101. Specifically, the annular double-sided adhesive 1921 surrounds a periphery of the sound pickup hole 115, and a portion of the mesh 1922 located at a center of the annular adhesive 1921 is disposed opposite to the sound pickup hole 115.

Optionally, the annular double-sided adhesive 1921 is provided in two layers, and the mesh 1922 is provided in one layer. The mesh 1922 is stacked and bonded between the two layers of the annular double-sided adhesive 1921. By disposing the annular double-sided adhesive 1921 in two-layer, a bonding strength of the mesh 1922 can be increased, which facilitates to fixing the mesh 1922, and increases a thickness of the stacked structure. Therefore, the stacked structure can be sealed between the outer housing 11 and the decorative cover 12, or between the outer housing 11 and the sealing ring 191a or 191b more tightly, thereby improving the sealing performance.

Optionally, the annular double-sided adhesive 1921 is provided in two layers, and the mesh 1922 is provided in two layers. The two-layer annular double-sided adhesive 1921 and the two-layer mesh 1922 are spaced apart. One layer of the mesh 1922 is stacked and bonded between the two layers of the annular double-sided adhesive 1921, and one layer of the annular double-sided adhesive 1921 is stacked between the two layers of the mesh 1922. By disposing the mesh 1922 in two-layer, filtration and barrier effects can be further enhanced. By disposing the annular double-sided adhesive 1921 in two-layer, the two layers of the mesh 1922 can be effectively fixed, and a thickness of the stacked structure can be increased. Therefore, the stacked structure can be sealed between the outer housing 11 and the decorative cover 12, or between the outer housing 11 and the sealing ring 191a or 191b more tightly, thereby improving the sealing performance.

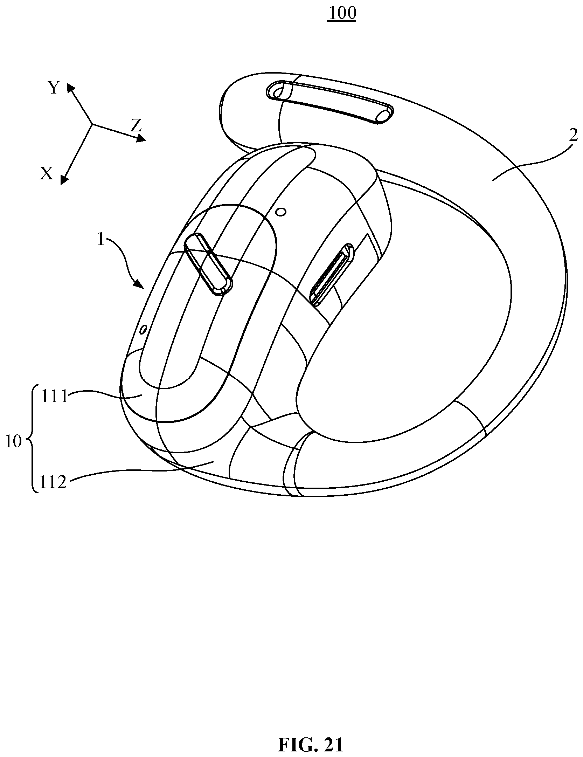

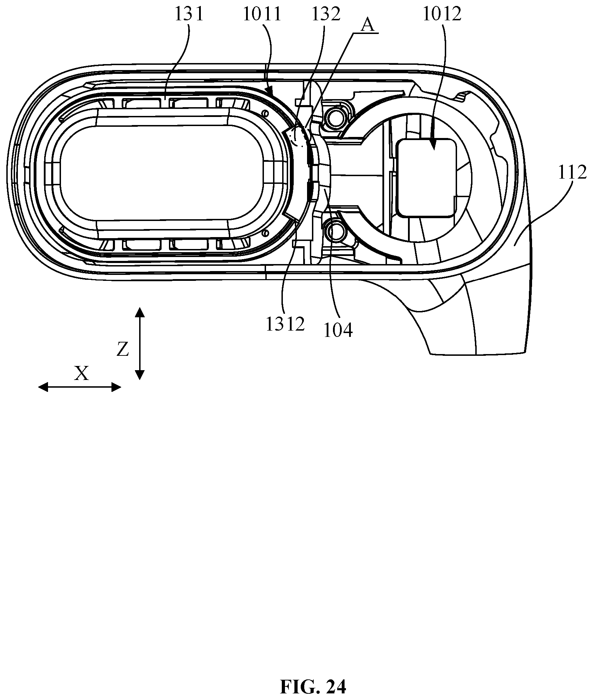

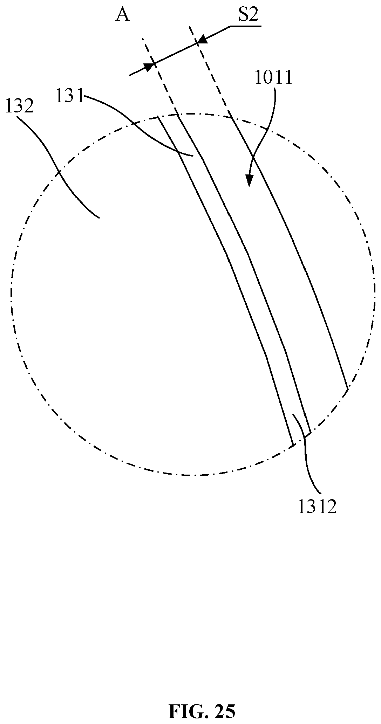

Referring to FIGs. 21 to 23, as mentioned above, the earphone 100 may include the housing assembly 10 and the speaker 13. Optionally, the earphone 100 may further include a sealing adhesive (not shown in FIGs. 21 to 23). The housing assembly 10 is configured to form a first accommodation cavity 1011. The speaker 13 includes a basin stand 131 and a metal pad 132. Referring to FIGs. 24 and 25, the basin stand 131 is disposed within the first accommodation cavity 1011, and the metal pad 132 is disposed on a side of the basin stand 131 facing the battery 14, thereby ensuring an electrical connection between the speaker 13 and other components. The sealing adhesive is used to seal a gap between an outer peripheral wall of the basin stand 131 and an inner peripheral wall of the first accommodation cavity 1011.

By disposing the sealing adhesive to seal the gap between the outer peripheral wall of the basin stand 131 and the inner peripheral wall of the first accommodation cavity 1011, a space between the speaker 13 and the housing can be sealed, thereby enhancing the sealing performance of the housing assembly 10 and reducing the risk of damaging the electronic components due to water ingress.

During a dispensing process of the sealing adhesive, it is often necessary to dispense the sealing adhesive around the basin stand 131, so that the sealing adhesive continuously fills the gap between the outer peripheral wall of the basin stand 131 and the inner peripheral wall of the first accommodation cavity 1011, thereby achieving a stable and reliable sealing performance between the outer peripheral wall of the basin stand 131 and the inner peripheral wall of the first accommodation cavity 1011. In the prior art, the metal pad 132 is often disposed to extend from the basin stand 131 to outside the inner peripheral wall of the first accommodation cavity 1011, so as to connect to a power source located outside the first accommodation cavity 1011. During the dispensing process of the sealing adhesive, the metal pad 132 significantly blocks the gap between the outer peripheral wall of the basin stand 131 and the inner peripheral wall of the first accommodation cavity 1011, making it difficult to dispense the sealing adhesive near the metal pad 132. In addition, the sealing adhesive may be interrupted at the metal pad 132, thereby reducing sealing reliability.

By disposing the metal pad 132 to be located on a side of the inner peripheral wall of the first accommodation cavity 1011 facing the battery 14, and disposing an interval between the metal pad 132 and the inner peripheral wall of the first accommodation cavity 1011, the gap between the outer peripheral wall of the basin stand 131 and the inner peripheral wall of the cavity at the metal pad 132 can be exposed to the outside during the dispensing process. This facilitates the sealing adhesive to dispensing near the metal pad 132 and continuous filling the gap between the outer peripheral wall of the basin stand 131 and the inner peripheral wall of the first accommodation cavity 1011, thereby achieving a stable and reliable sealing performance.

Furthermore, a wire 133 may extend from the metal pad 132 to the inner peripheral wall of the first accommodation cavity 1011. A size of a diameter of the wire 133 is much smaller than a size of the metal pad 132, and the wire 133 causes less obstruction to the gap between the outer peripheral wall of the basin stand 131 and the inner peripheral wall of the cavity, which facilitates the sealing adhesive to dispensing and achieving the stable and reliable sealing performance.

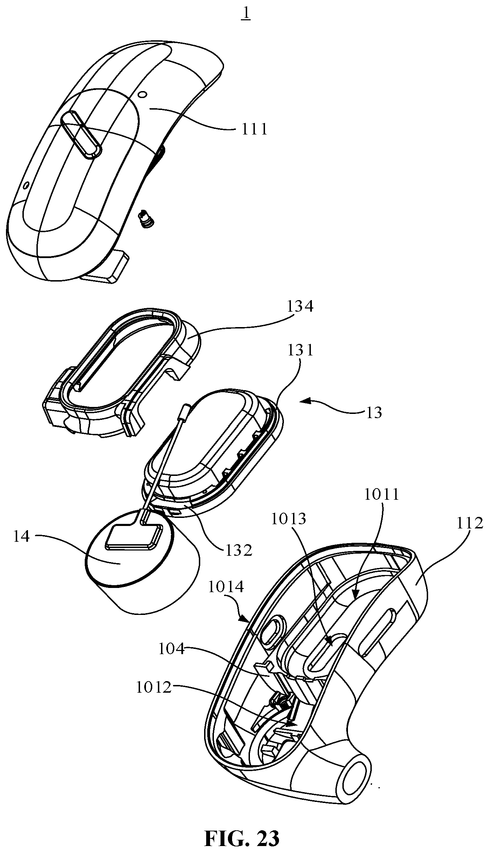

Referring to FIGs. 23 to 25, in some embodiments, the metal pad 132 is configured not to extend beyond the outer peripheral wall of the basin stand 131.

In this way, the metal pad 132 does not block the gap between the outer peripheral wall of the basin stand 131 and the inner peripheral wall of the first accommodation cavity 1011 during the dispensing process, thereby facilitating the dispensing operation and achieving the stable and reliable sealing performance.

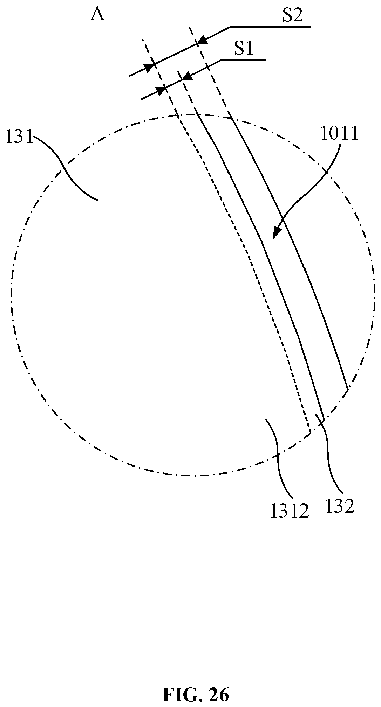

Referring to FIGs.23, 24, and 26, in some embodiments, the metal pad 132 is disposed beyond the outer peripheral wall of the basin stand 131. An extension distance S1 of the metal pad 132 relative to the outer peripheral wall of the basin stand 131 does not exceed one-half of a size S2 of the gap between the outer peripheral wall of the basin stand 131 and the inner peripheral wall of the first accommodation cavity 1011.

In this way, the metal pad 132 does not fully block the gap between the outer peripheral wall of the basin stand 131 and the inner peripheral wall of the first accommodation cavity 1011 during the dispensing process, and the dispensing operation can still be performed near the metal pad 132. By disposing the extension distance S1 of the metal pad 132 relative to the outer peripheral wall of the basin stand 131 to not exceed one-half of the size S2 of the gap between the outer peripheral wall of the basin stand 131 and the inner peripheral wall of the first accommodation cavity 1011, a portion of the gap between the outer peripheral wall of the basin stand 131 and the inner peripheral wall of the first accommodation cavity 1011 can still be exposed at the metal pad 132 during the dispensing process. As the sealing adhesive has a degree of fluidity during the dispensing process, the sealing adhesive can be fully filled within the gap between the outer peripheral wall of the basin stand 131 and the inner peripheral wall of the first accommodation cavity 1011 due to the degree of fluidity of the sealing adhesive, thereby achieving the stable and reliable sealing performance. For example, the extension distance S1 of the metal pad 132 relative to the outer peripheral wall of the basin stand 131 may be disposed to be 0.2 to 0.3 times or 0.4 to 0.5 times the size S2 of the gap between the outer peripheral wall of the basin stand 131 and the inner peripheral wall of the first accommodation cavity 1011.

In some embodiments, referring to FIGs. 23, 27, and 28, the first accommodation cavity 1011 has an opening end 1014. The basin stand 131 is placed into the first accommodation cavity 1011 through the opening end 1014. The metal pad 132 is located on a side of the basin stand 131 facing the opening end 1014. The earphone 100 further includes the wire 133. The wire 133 is welded to a side of the metal pad 132 facing the opening end 1014.

During an assembly process of the basin stand 131, a peripheral side of the basin stand 131 and a side of the basin stand 131 facing away from the opening end 1014 may contact with an inner wall of the first accommodation cavity 1011. By disposing the metal pad 132 on the side of the basin stand 131 facing the opening end 1014, and welding the wire 133 to the side of the metal pad 132 facing the opening end 1014, interference from the metal pad 132 and the wire 133 on the assembly process can be reduced, thereby improving the assembly efficiency.

Referring to FIGs. 23 to 25, in some embodiments, the sealing adhesive is applied into the gap between the outer peripheral wall of the speaker basin stand 131 and the inner peripheral wall of the first accommodation cavity 1011 from the side of the opening end 1014.

During the dispensing process, the gap between the outer peripheral wall of the speaker basin stand 131 and the inner peripheral wall of the first accommodation cavity 1011 may be exposed to the outside through the opening end 1014, which facilitates the dispensing operation on the gap between the outer peripheral wall of the speaker basin stand 131 and the inner peripheral wall of the first accommodation cavity 1011 from the outside through the opening end 1014. Therefore, the sealing adhesive can enter into the gap between the outer peripheral wall of the speaker basin stand 131 and the inner peripheral wall of the first accommodation cavity 1011 from the side of the opening end 1014, which facilitates the dispensing operation and improves the assembly efficiency.

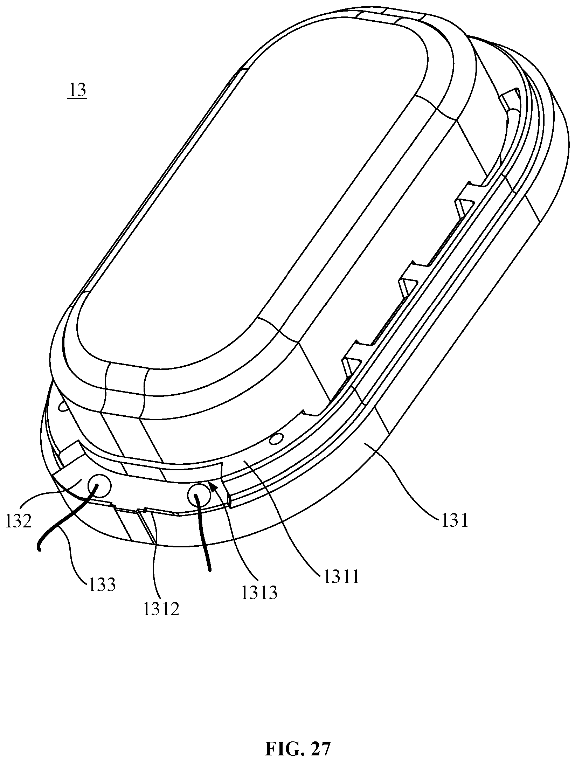

Referring to FIGs. 27 to 29, in some embodiments, the earphone 100 further includes a bracket 134. The basin stand 131 is provided with an annular platform 1311 and a mounting platform 1312 facing the opening end 1014. The annular platform 1311 is disposed circumferentially around the speaker basin stand 131 and is provided with a first notch 1313. The mounting platform 1312 is disposed circumferentially around the basin stand 131 and corresponds to a position of the first notch 1313. The metal pad 132 is disposed on the mounting platform 1312, and the bracket 134 is supported on the annular platform 1311.

The mounting platform 1312 may be recessed to a direction away from the opening end 1014 at the first notch 1313 relative to the annular platform 1311. The metal pad 132 typically has a protruding height. By disposing the first notch 1313 in the annular platform 1311, the bracket 134 can avoid the metal pad 132 and the wire 133 when the bracket 134 is supported on the annular platform 1311, thereby facilitating the assembly of the bracket 134 and the basin stand 131, and improving the assembly efficiency.

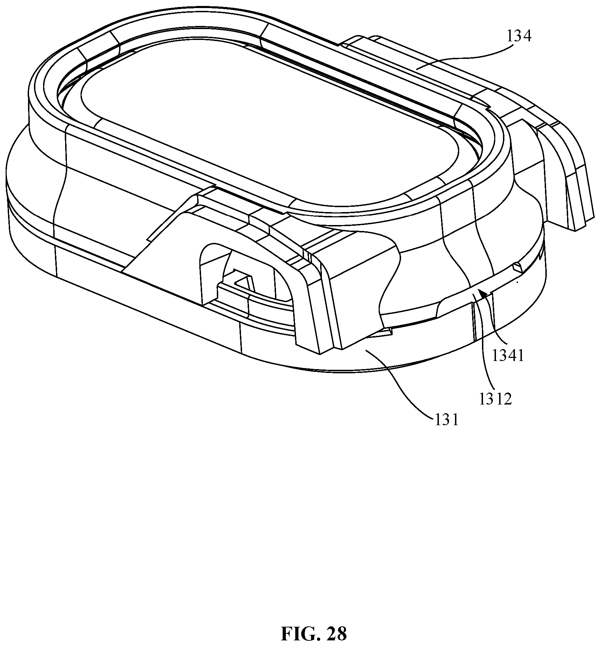

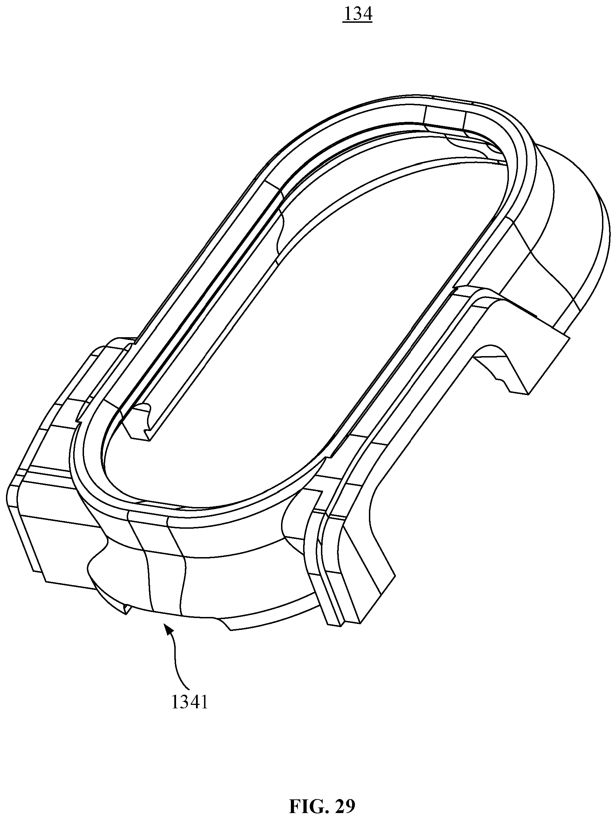

In some embodiments, referring to FIGs. 28 and 29, an end of the bracket 134 facing the speaker basin stand 131 is provided with a second notch 1341. The second notch 1341 corresponds to the mounting platform 1312 along a circumferential direction of the basin stand 131.

By disposing the second notch 1341, the bracket 134, when supported on the annular platform 1311, the bracket 134 can avoid the metal pad 132 and the wire 133 when the bracket 134 is supported on the annular platform 1311, thereby facilitating the assembly of the bracket 134 and the basin stand 131, and improving the assembly efficiency.

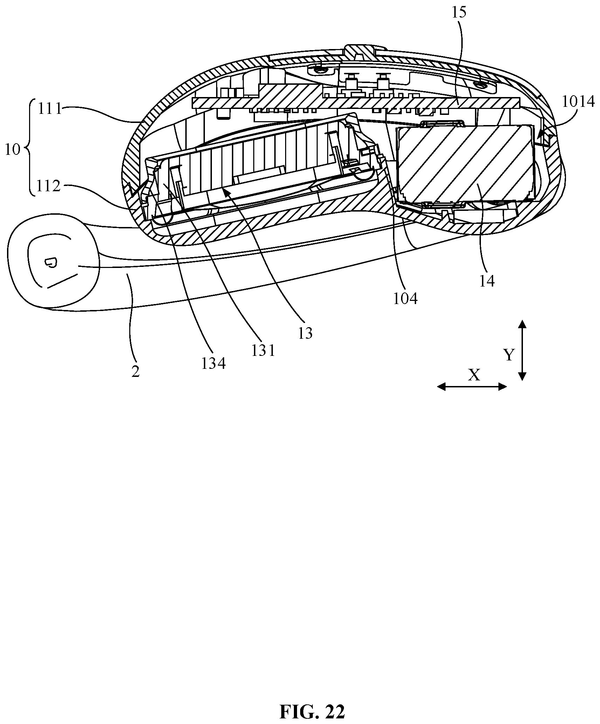

In some embodiments, referring to FIGs. 22 to 24, the housing assembly 10 further includes a second accommodation cavity 1012. The housing assembly 10 includes the partition wall 104 for separating the first accommodation cavity 1011 and the second accommodation cavity 1012. The earphone 100 further includes the battery 14. The battery 14 is disposed in the second accommodation cavity 1012. The metal pad 132 is located on a side of the speaker basin stand 131 facing the partition wall 104.

A portion of the inner peripheral wall of the first accommodation cavity 1011 may be formed by the partition wall 104, and a portion of the sealing adhesive may seal a gap between the outer peripheral wall of the basin stand 131 and the partition wall 104. By disposing the partition wall 104, the risk of water flowing from a side of the speaker 13 near the sound outlet hole 1013 into the second accommodation cavity 1012 can be reduced.

The battery 14 may serve as a power source for supplying power to the speaker 13. The first accommodation cavity 1011 and the second accommodation cavity 1012 are disposed adjacent to each other, which facilitates to simplifying a wiring connection between the battery 14 and the speaker 13. By disposing the metal pad 132 on the side of the basin stand 131 facing the partition wall 104, a distance between the battery 14 and the metal pad 132 can be reduced, thereby simplifying the wiring connection between the battery 14 and the speaker 13. Furthermore, the metal pad 132 may be connected to the battery 14 via the wire 133, so that the battery 14 supplies power to the speaker 13.

The above descriptions are only a portion of embodiments of the present disclosure, and are not intended to limit the scope of the present disclosure. Any equivalent device or equivalent process transformed using the contents of the specification of the present disclosure and the accompanying drawings, or directly or indirectly applied in other related technical fields, are all included in the scope of the present disclosure.

## Claims

1. An earphone, comprising:
a housing assembly, wherein the housing assembly is configured to form an accommodation space and has a first direction and a second direction disposed orthogonally to the first direction, the housing assembly further includes a first end and a second end disposed opposite to each other along the first direction;
an ear hook connected to the housing assembly, wherein in a wearing state, at least a portion of the ear hook is located at a rear side of an ear portion of a user, the housing assembly is stacked on a front side of the ear portion of the user along the second direction, and at least a portion of the first end of the housing assembly extends into a concha cavity of the ear portion of the user; wherein
the first direction has a positive direction pointing from the second end to the first end,
an outer wall surface of a side of the housing assembly facing away from the ear portion of the user includes a first arc-shaped transition region, and
on a reference plane defined by the first direction and the second direction, a curvature radius of the first arc-shaped transition region gradually decreases along the positive direction of the first direction and gradually approaches the ear portion of the user, so as to form a first portion of the first end.

2. The earphone of claim 1, wherein an extension length of the first arc-shaped transition region along the first direction is not less than 16 millimeters.

3. The earphone of claim 1, wherein the first end has a first reference point farthest from the second end along the first direction, and an angle between a tangent line of the first arc-shaped transition region at the first reference point and the second direction is within a range from 5 degrees to 8 degrees.

4. The earphone of claim 3, wherein the first arc-shaped transition region has a first intermediate reference point, a distance between the first intermediate reference point and the first reference point along the first direction is within a range from 1.8 millimeters to 3 millimeters, and an angle between a tangent line of the first arc-shaped transition region at the first intermediate reference point and the second direction is within a range from 35 degrees and 53 degrees.

5. The earphone of claim 4, wherein the first arc-shaped transition region has a second intermediate reference point, a distance between the second intermediate reference point and the first reference point along the first direction is within a range from 6 millimeters to 9 millimeters, and an angle between a tangent line of the first arc-shaped transition region at the second intermediate reference point and the second direction is within a range from 60 degrees to 80 degrees.

6. The earphone of claim 3, wherein
a side of the housing assembly facing the ear portion of the user has a third reference point adjacent to the first end and closest to the ear portion of the user along the second direction,
an outer wall surface of the side of the housing assembly facing the ear portion of the user includes a second arc-shaped transition region located between the first reference point and the third reference point,
the first direction has a negative direction pointing from the first end to the second end, and
a curvature radius of the second arc-shaped transition region gradually increases along the negative direction of the first direction and gradually approaches the ear portion of the user, so as to form a second portion of the first end.

7. The earphone of claim 6, wherein a distance from the third reference point to the first reference point along the first direction is within a range from 3 millimeters to 6 millimeters.

8. The earphone of claim 7, wherein an angle between a tangent line of the second arc-shaped transition region at the third reference point and the second direction is within a range from 75 degrees to 95 degrees.

9. The earphone of claim 6, wherein the outer wall surface of the side of the housing assembly facing the ear portion of the user further includes a third arc-shaped transition region located on a side of the third reference point facing away from the first reference point, and the third arc-shaped transition region is disposed in an arch shape away from the ear portion of the user.

10. The earphone of claim 9, wherein a distance from an apex of the third arc-shaped transition region to the first reference point along the first direction is within a range from 15 millimeters to 18 millimeters, and a distance from the apex of the third arc-shaped transition region to the first reference point along the second direction is within a range from 1 millimeter to 3 millimeters.
